**Europäisches Patentamt**

**European Patent Office**

**Office européen des brevets**

(19)

(11) Veröffentlichungsnummer: **0 104 455**
**B1**

(12) **EUROPÄISCHE PATENTSCHRIFT**

(45) Veröffentlichungstag der Patentschrift:
**19.11.87**

(21) Anmeldenummer: **83108423.1**

(22) Anmeldetag: **26.08.83**

(51) Int. Cl.⁴: **F 16 H 3/72**

(54) **Umlaufgetriebe.**

(30) Priorität: **28.08.82 DE 3232122**

(43) Veröffentlichungstag der Anmeldung:
**04.04.84 Patentblatt 84/14**

(45) Bekanntmachung des Hinweises auf die Patenterteilung:
**19.11.87 Patentblatt 87/47**

(84) Benannte Vertragsstaaten:
**AT BE CH DE FR GB IT LI NL SE**

(56) Entgegenhaltungen:
**CH - A - 356 329**
**FR - A - 802 280**
**FR - A - 996 223**
**FR - A - 1 176 227**

**Konstruktion 20 (1960) H.5. S. 182-186**
**ATZ 70 (1968) 1, S.4**

(73) Patentinhaber: **Seefluth, U. Chr., Alsterufer 37,**
**D-2000 Hamburg 36 (DE)**

(72) Erfinder: **Der Erfinder hat auf seine Nennung verzichtet**

(74) Vertreter: **Flügel, Otto, Dipl.-Ing. et al, Dipl.-Ing. Otto**
**Flügel Dipl.-Ing. Manfred Säger Patentanwälte**
**Cosimastrasse 81 Postfach 810 540,**
**D-8000 München 81 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Umlaufgetriebe mit einem Antriebsglied, einem Abtriebsglied und einem Steuerglied, dessen Umlaufgeschwindigkeit relativ zu derjenigen des Antriebsgliedes und/oder des Abtriebsgliedes veränderbar ist, mit ständig im Eingriff befindlichen Zahnrädern und mit einem vorgegebenen Standübersetzungsverhältnis, dass ein Übersetzungsverhältnis zwischen den Zahnrädern der Aussenglieder und/oder durch wenigstens eine Übersetzungsstufe innerhalb des Umlaufräder aufweisenden Zwischengliedes bestimmt ist, welches die Aussenglieder getrieblich derart verbindet, dass diese in gleicher Richtung drehen.

Bei derartigen Umlaufrädergetrieben wird die stufenlose Veränderung der Drehzahlübersetzung vom treibenden zum getriebenen Glied dadurch erreicht, dass die Umlaufdrehzahl des Zwischengliedes von aussen unter Überwindung dessen Reaktionsmomentes, insbesondere mittels eines Steuergetriebes oder separaten Antriebes, verändert wird. Dabei ist in der Regel auch das zwischen den Aussengliedern angeordnete und diese getrieblich miteinander verbindende Zwischenglied zugleich dasjenige, in welches die Steuerbewegung eingeleitet wird.

Es sind mehrere steuerbare Umlaufrädergetriebe bekannt geworden, bei denen durch die Steuerung der Drehzahl des Zwischengliedes die stufenlose Steuerung des gesamten Getriebes erfolgt. Der Nachteil bei den bekannten Getrieben besteht darin, dass die notwendige, zur Steuerung des Getriebes aufzubringende Kraft in Bezug auf das Gesamtdrehmoment des Getriebes zwar verringert werden kann, die verbleibende Steuerkraft in Form des Reaktionsmomentes des Zwischengliedes jedoch immer noch Hilfsgetriebevorrichtungen besonderer Art erforderlich macht, deren Bauaufwand relativ gross ist oder deren Verlustfaktor, insbesondere für Fahrzeugantriebe, zu hoch liegt. Oftmals sind diese Steuergetriebevorrichtungen für das Zwischenglied auch als Friktionsgetriebe ausgelegt und somit in der Leistung stark begrenzt bzw. schlupfbehaftet. Immer für den Fall schlupffreier bzw. exakt steuerbarer Übersetzungsverhältnisse erscheinen daher formschlüssige Getriebe erforderlich, die auch in der Grössenordnung des zu übertragenden Drehmomentes grundsätzlich keine Begrenzung aufweisen und im Verhältnis zum übertragenen Drehmoment gesehen, verhältnismässig klein und robust gebaut werden können.

Umlaufgetriebe der in Rede stehenden Art sind in unterschiedlicher Weise zu betreiben, wie dem Aufsatz «Über die Auslegung von stufenlos einstellbaren Differentialgetrieben», abgedruckt in «Konstruktion 20 (1968) Heft 5» Seiten 182–186, zu entnehmen ist. In Ausbildung mit einer zwischen den beiden Aussengliedern angeordneten Umlaufradkette aus mehreren Umlaufrädern – beispielsweise zwei gemäss ATZ 70 (1968) 1, Seite 4, Bild 14 – ergibt sich ein bekanntes Umlaufgetriebe mit den eingangs genannten Merkmalen.

Der Erfindung liegt die Aufgabe zugrunde, ein Umlaufrädergetriebe der eingangs genannten Art zu schaffen, bei dem zur Steuerung der Drehzahl des Zwischengliedes ein Reaktionsmoment nicht oder nur in einem geringen Ausmass überwunden werden muss.

Die Aufgabe wird erfindungsgemäss dadurch gelöst, dass eine zwischen dem einen Aussenglied und dem anderen Aussenglied zwischengeschaltete Umlaufradkette, deren Achsen auf wenigstens zwei voneinander abweichenden Radiallinien der Zentralachse liegen, derart angeordnet, gelagert und in der Grösse der Einzelräder so bemessen ist, dass wenigstens eines der – vorzugsweise am Ende der Radkette befindlichen – gegenüber dem bzw. den anderen Umlaufräder schwimmend gelagert ist, so dass es bei belastetem Getriebe an den Nachbarrädern unter radialer oder zumindest eine Radialkomponente aufweisender Druck- bzw. Zugbelastung zur Abstützung gelangt und das ohne Einleitung einer Steuer- bzw. Bremskraft auf das Zwischenglied eine Reaktionsbewegung desselben zu den Aussengliedern wenigstens annähernd verhindert ist.

Die Grundvorstellung der Erfindung geht davon aus, eine aus Umlaufrädern bestehende Zahnradkette, die sich insbesondere im Bereich des Zwischengliedes befindet, so anzuordnen und zu lagern, dass deren Zahnräder eine Doppelfunktion annehmen: sie übertragen das vom treibenden Glied auf die Radkette eingeleitete Drehmoment auf das getriebene Glied in der Funktion als verbundene oder sich unter jeweils radialem Anlagedruck berührende Zwischenkörper, über die das eingeleitete Moment zumindest abschnitts- oder streckenweise linear und somit in Form einer gerichteten Kraft verläuft, während sie gleichzeitig – insbesondere bei Einleitung einer Steuerbewegung auf das Zwischenglied von aussen – die Funktion des Miteinanderkämmens und damit des Drehens um die eigenen Achsen jederzeit ausführen können.

Durch die Drehbewegung der Umlaufräder um ihre eigenen Achsen bei Einleitung einer Steuerbewegung auf das Zwischenglied wird kein oder nur ein anteilmässig geringes Drehmoment übertragen. Das bedeutet, dass mindestens eines der Umlaufräder in der Lage sein muss, nach Art einer mechanischen Brücke – kinematisch gesehen wie ein «Stab» – mindestens abschnittsweise linear gerichtete Kräfte über den stehenden oder drehenden Radkörper zu übertragen, wodurch die Gesamtkinematik des Zwischengliedes eine Änderung erfährt. Dies erreicht man dadurch, dass wenigstens dieses eine betrachtete Zahnrad – insbesondere ein Endrad der Radkette – derart an seinen Nachbarrädern abgestützt ist, dass radiale Druckkräfte über die Anlagepunkte bzw. Zugkräfte über die Radachsen übertragen werden können.

In besonders bevorzugter Ausführung der Erfindung entstehen diese radialwirkenden Anlagedruck- bzw. Zugkräfte zwischen dem betrachteten Umlaufrad und seinen Nachbarrädern durch die auf das Umlaufrad wirkenden Reaktionskräfte infolge des vom zentralen Antriebsrad des treibenden Gliedes her auf die Umlaufradkette eingeleiteten Drehmomentes. Das bedeutet, dass das Umlaufrad bei belastetem Getriebe selbsttätig in eine derartige Position gedrückt wird. Dies wird insbesondere dadurch möglich, dass das unter Anlagedruck oder Zug an den Nachbarrädern abgestützte Umlaufrad freischwimmend, entsprechend spielbehaftet bzw. entlang wenigstens einer Bahn versetzbar gehalten wird, derart, dass durch das Fehlen einer die auf den Radkörper einwirkenden Reaktionskräfte abstützenden zentralen Achslagerung auf einem mit mindestens dem benachbarten Umlaufrad gemeinsamen zentralgelagerten Steg eine Anregung zu einer Eigendrehung desselben und damit eine Reaktionsumlaufbewegung des Zwischengliedes relativ zu der Drehbewegung des treibenden bzw. getriebenen Gliedes wenigstens annähernd vermieden wird.

Mit anderen Worten: Die einzelnen, auf einem gemeinsamen Planetenträger (Steg) über die Achslagerungen einer Umlaufradkette zur Antriebsdrehrichtung positiv oder negativ wirkenden Reaktionskräfte werden dadurch verändert bzw. gegeneinander wenigstens annähernd aufgehoben, dass die Achslagerung auf dem Planetenträgern für wenigstens ein Umlaufrad – insbesondere das Endrad der Radkette – entfällt. Es wird vielmehr unter radialem Anlagedruck an die Nachbarräder oder über Achsverbindung mittels separatem Verbindungssteg in einer zum gemeinsamen Hauptplanetenträger nicht fixierten Position gehalten.

Die hier sich ergebenden physikalischen Einflüsse und Reaktionen sind vielgestaltig und möglicherweise nicht ohne weiteres mit herkömmlicher Denkweise zu beschreiben, was schon darin begründet sein mag, dass hier Zahnräder – entgegen dem normalen Bestreben des Fachmannes – nicht nur zur Übertragung von Drehmomenten durch Drehbewegungen, sondern zumindest teilweise auch im Sinne von zwischengelagerten Körpern zur Übertragung von Linearkräften herangezogen werden. Die für die Übertragung des eingeleiteten Drehmomentes aufgebrachte Übertragungsstrecke kann betrachtet werden als eine solche, dass vom in die Radkette krafteinleitenden Wälzpunkt zum aus der Radkette kraftausleitenden Wälzpunkt bei belastetem Getriebe ein mindestens abschnittsweise linear verlaufender Kraftfluss dadurch aufgebracht wird, dass sich mindestens ein – vorzugsweise an einem Ende der Radkette befindliches – Umlaufrad in bezug auf die Nachbarräder, abgesehen von den normalen Zahnflankendrücken, in einer Berührungs- bzw. Verbindungsposition unter radialer oder doch zumindest einer radiale Komponente aufweisender Druck- bzw. Zugbelastung befindet. Das Drehmoment wird daher in der hier benutzten Vorstellung bei von aussen in der Umlaufbewegung unbeeinflusstem Steuer- bzw. Zwischenglied wenigstens teilweise in eine vektorielle Kraft umgesetzt. Diese vektorielle Kraft verläuft derart über die Radkette, dass die induzierten Linearkräfte in einem von 90° abweichenden spitzen Winkel auf die Schnittpunkttangente vorzugsweise im oder in der Nähe des von der Radkette kraftausleitenden Wälzpunktes auf die Zahnflanken des getriebenen Zentralrades oder eines diesem vorgeschalteten Zahnrades treffen und dadurch eine Reaktionsbewegung des Steuergliedes relativ zum Antriebs- oder Abtriebsglied nicht entstehen lassen oder kompensieren. Dadurch erreicht man, dass das unter Zug- oder Druckbelastung an den Nachbarrädern abgestützte Umlaufrad ohne Einleitung einer Steuerkraft nicht dreht. Andererseits wird bei Einleiten einer Steuerkraft in das Zwischenglied das Umlaufrad mit den übrigen Rädern der Kette aufgrund des immer vorhandenen kämmenden Eingriffes voll als Planetenrad genutzt, also im Zuge der Steuerbewegung gedreht, welche Drehbewegung sich der Rückfunktion bzw. Linearkraftübertragungseigenschaft dieses Umlaufrades überlagert.

Bei entsprechend kleinen zu übertragenden Drehmomenten über das Getriebe könnte man sich vorstellen, die in Frage stehenden Umlaufräder unter die dann entsprechende Zug- oder Druckbelastung zu setzen, ohne besondere Aufnahmeausbildungen für radiale oder eine radiale Komponente aufweisende Zug- oder Druckkräfte zur Verfügung zu stellen. In bevorzugter Ausführung werden aber die unter Druckbelastung aneinanderliegenden Räder neben der Verzahnung mit Teilkreiszylinderflächen versehen oder mit koaxial gelagerten Drehkörpern ausgerüstet, die die Schubkräfte der sich berührenden Räder auffangen und deren Achsabstand zueinander fixieren. Solche koaxial gelagerten Drehkörper können beispielsweise wälzgelagert sein. Teilweise oder vollständig anstelle einer solchen Abstützung, insbesondere auch bei zugbelasteter Anhängung an der Zentralradachse, können zwischen den Achsen separate Stege zur Aufnahme dieser Zug- und Druckkräfte bzw. zur Sicherstellung des Achsabstandes zwischen diesen Rädern vorgesehen sein.

Infolge der beschriebenen Anordnung befindet sich das Getriebe bei von aussen unbeeinflusst mit der Drehzahl der Aussenglieder mit umlaufendem Zwischenglied im sogenannten Kupplungspunkt. Die stufenlose Regelung des Übersetzungsverhältnisses erfolgt dadurch, dass das – mindestens annähernd – reaktionsbewegungsfrei mit umlaufende Zwischenglied in seiner Drehzahl von aussen vorzugsweise mittels Hilfsgetriebe oder Bremsung verändert, insbesondere reduziert oder umgekehrt, wird. Dabei entsteht je nach Ausführung des Getriebes praktisch keine oder nur eine sehr geringe aufzubringende Regelkraft.

Dies wird verständlich, wenn man berücksichtigt, dass das in Anlagedruckposition gehaltene Umlaufrad das eingeleitete Moment mangels einer Achsfixierung auf dem Steg nicht in eine Drehbewegung umwandeln kann. Das eingeleitete Moment verläuft vielmehr in abweichender Richtung von den normalen tangentialen Zahnflankendrücken, die entstehen, wenn ein an der Achse gelagertes Zahnrad zu einer Drehbewegung angetrieben wird, und es entsteht gewissermassen ein Eingriff in die kinematischen Kräfteverhältnisse im Zwischenglied zugunsten der in Drehrichtung wirkenden Reaktionskräfte. Das am krafteinleitenden Wälzpunkt auf die Radkette induzierte Moment in Richtung Antriebsdrehrichtung bleibt voll erhalten, während das gewöhnlich durch die Drehbewegung des Endrades der Kette am getriebenen Glied entstehende negative Reaktionsmoment vermindert oder kompensiert wird.

Bei richtiger Anordnung der Umlaufräder zueinander entspricht die aufzubringende Steuerkraft für das Zwischenglied lediglich normalen Reibungskräften im Getriebe, welche durch Korrekturen in der Umlaufradanordnung in Richtung der Tendenz eines negativen Reaktionsmomentes des Zwischengliedes annähernd auf den Nullwert gebracht werden können.

Es sind jedoch auch Anwendungsfälle denkbar, bei denen es zweckmässig ist, dem Zwischenglied durch entsprechende Anordnung der Umlaufräder ein geringes Reaktionsmoment zu belassen, welches bei der Steuerung der Drehzahl des Zwischengliedes dann überwunden werden muss. In einem solchen Falle würde das unbeeinflusste Zwischenglied – bei stehender Abtriebswelle – die volle Reaktionsbewegung unter geringem Drehmoment entgegen der Antriebsdrehrichtung der treibenden Welle ausführen.

In bevorzugter Ausführung wird das durch das Übersetzungsverhältnis des Getriebes zu erwartende Reaktionsmoment des Zwischengliedes vollständig neutralisiert. Damit ist die Voraussetzung gegeben, dass das Zwischenglied trotz des Übersetzungsverhältnisses in der Standübersetzung mit den Aussengliedern – dem treibenden und dem getriebenen Glied – frei mitumläuft, ohne dass dessen Räder kämmen, solange das Steuerglied (Zwischenglied) von aussen unbeeinflusst bleibt.

Bei der Grundausführung des erfindungsgemässen Getriebes sind eingeleitetes und abgenommenes Drehmoment im gesamten Regelbereich zwischen 1:1 und ∞:1 annähernd gleich gross. Das bedeutet, dass immer nur soviel von der angebotenen Leistung der treibenden Welle abgenommen wird, wie das Produkt zwischen Drehzahl und Drehmoment an der Abtriebswelle ausmacht. Will man eine Drehmomentwandlung erzielen, so wird das erfindungsgemässe Getriebe als Regelgetriebe für Reaktionsglieder von drehmomentwandelnden Planetengetrieben herangezogen oder mit Drehmomentwandlern – z.B. hydrodynamischen oder hydrostatischen Wandlern – gekoppelt.

Die Funktionsweise des erfindungsgemässen Getriebes bietet dabei die Möglichkeit einer stufenlosen Abstützung des Reaktionsgliedes eines konventionellen Planetengetriebes gegen das Getriebegehäuse, indem das getriebene Glied des erfindungsgemässen Getriebes gehäusefest verankert wird.

Bei allen Ausführungsarten kann das getriebene Zentralrad bei Kraftflussumkehr grundsätzlich auch als treibendes Zentralrad fungieren. In einem solchen Falle würde die Steuerbewegung des Zwischengliedes der Drehzahl des treibenden Gliedes voreilen.

Die mit der Erfindung erzielten Vorteile bestehen insbesondere darin, dass sich das Zwischenglied des Getriebes in der Drehzahl steuern lässt, ohne dass dabei ein kinematisch bedingtes Reaktionsmoment überwunden werden muss.

Es können für die Getriebesteuerung somit auch solche Hilfsgetriebe herangezogen werden, die im nahezu unbelasteten Zustand bei Betriebsdrehzahlen noch einen ausreichend guten Wirkungsgrad aufweisen. Damit kann das erfindungsgemässe Getriebeprinzip praktisch für alle Anwendungsbereiche inklusive für den Fahrzeugantrieb eingesetzt werden. Weiterhin weist das Getriebe vom System her keine Leistungsbegrenzung und überdies einen vergleichsweise geringen Bauaufwand auf. Sehr grosse Leistungen können auf einfache Weise stufenlos übertragen werden. Zwecks Drehmomentveränderung, insbesondere im Fahrzeugsantriebsbereich, kann das Getriebe mit anderen konventionellen Getrieben auf die verschiedenste Weise kombiniert oder integriert werden. Z.B. kann es mit einem Planetengetriebe mit innerer Leistungsverzweigung gekoppelt und als stufenlos regelbares Steuergetriebe für ein Planetendifferential herangezogen werden bzw. für die stufenlose Verbindung von einem ersten und zweiten Freiheitsgrad eines Umlaufrädergetriebes. Es kann auch als Vor- bzw. Nachschaltgetriebe für hydrodynamische oder hydrostatische Drehmomentwandler eingesetzt werden.

Schliesslich hat das erfindungsgemässe Umlaufrädergetriebe eine besondere Eigenschaft, die eine exklusive Anwendung ermöglicht: Das Getriebe kann nämlich zur drehzahlvariablen Gehäuseabstützung von Reaktionsgliedern bei Planetengetrieben herangezogen werden, da es seine volle Regelfunktion auch dann beibehält, wenn das getriebene Glied gehäusefest verankert ist und keine Drehbewegung ausführen kann.

Sieht man von den bei allen Planetengetrieben auftretenden Lager-, Plansch- und Abwälzverlusten ab, so arbeitet das Getriebe vom System her verlustfrei, drehmomentschlüssig und somit schlupffrei. In der direkten Übersetzung 1:1 im Kupplungspunkt dreht das ganze Getriebe als Block, ohne das Zahnräderkämmen, und die Regelvorrichtung kann – beispielsweise im Hauptarbeitsbereich des Getriebes – aus Verschleissgründen abgeschaltet werden. Infolge der genannten Eigenschaften kann das Getriebe universell zur stufenlosen Drehzahlregelung eingesetzt werden. Im Fahrzeugbereich kann die Verstellung des Getriebes z.B. auf sehr einfache Weise dadurch vorgenommen werden, dass das Regelhilfsgetriebe für das Zwischenglied (z.B. einer Axialkolben-Regeleinheit) in einer willkürlich gewählten Vielzahl von Steuerschritten in Form einer digitalen Regelung verstellt wird. Dabei ist eine optimale Anpassung an den Betriebszustand von Fahrzeug und Motor über einen geeigneten Steuercomputer möglich.

Da sich das beschriebene Getriebe in der Basisausführung im Kupplungspunkt befindet und bis zum Übersetzungsverhältnis ∞:1 geregelt werden kann, lässt sich das System auch als Anlaufkupplung für die verschiedensten Anwendungsbereiche einsetzen.

Bevorzugte Ausgestaltungen der Erfindung ergeben sich aus den Unteransprüchen im Zusammenhang mit den in der Zeichnung wiedergegebenen Ausführungsbeispielen, auf die besonders Bezug genommen wird und deren nachfolgende Beschreibung die Erfindung näher erläutert. Es zeigen

Fig. 1 eine prinzipielle und schematische Darstellung einer erfindungsgemäss angeordneten Planetenradkette im Bereich des Zwischengliedes des Getriebes als Ausschnitt in axialer Projektion gesehen;

Fig. 2 die Anordnung einer Radkette prinzipiell nach Fig. 1, jedoch unter Verwendung eines Umlaufrades mit zwei koaxialen Zahnkränzen;

Fig. 3 eine Ausführung des Getriebes nach Art der vorangegangenen Darstellungen, bei dem die Umlaufräder jedoch durch separaten Hilfssteg miteinander verbunden sind;

Fig. 4 eine bezüglich der Anordnung der Hilfsstege alternative Anordnung zu Fig. 3;

Fig. 5 ein in axialer Projektion dargestelltes Ausführungsbeispiel gemäss der vorangegangenen Figuren mit der Möglichkeit rechts und links drehender Antriebsdrehrichtung;

Fig. 6 eine alternative Ausführung zu Fig. 5 unter ausschliesslicher Verwendung von Umlaufrädern mit zwei koaxialen Zahnkränzen, deren Lagerposition durch Federkraft vorgegeben wird;

Fig. 6a ein Ausführungsbeispiel ähnlich denjenigen nach den Figuren 4 und 5, jedoch mit Lagerung der Umlaufräder auf zwei separaten Stegen;

Fig. 7 ein weiteres Ausführungsbeispiel der Erfindung für die praktische Anwendung unter Verwendung von zwei Umlaufradketten mit jeweils vier Umlaufrädern in schematischer axialer Projektion gesehen;

Fig. 8 ein Ausführungsbeispiel in schematischer axialer Projektion unter Verwendung von zwei zentralen Hohlrädern und zwei Umlaufradketten mit jeweils drei Umlaufrädern;

Fig. 9 ein weiteres Ausführungsbeispiel unter ausschliesslicher Verwendung von aussenverzahnten Rädern mit jeweils drei Umlaufrädern in der Radkette;

Fig. 10 eine Ausführung mit einem die Zentralachse überlappenden Umlaufrad;

Fig. 11 ein Ausführungsbeispiel unter Verwendung eines Zahnringes mit Innen- und Aussenverzahnung;

Fig. 12 eine schematische Längsschnittdarstellung einer Getriebeausführung, insbesondere für den Fahrzeugantrieb, in Kombination mit einem konventionellen Umlaufrädergetriebe und einer hydrostatischen Steuervorrichtung.

In der nachfolgenden Beschreibung sind Zahnräder nur als Teilkreise und Wälzpunkte mit einem radialen Querstrich am Berührungspunkt der Räder dargestellt. Kopf- und Fusskreise der Zahnräder wurden zur besseren Übersicht weggelassen. Die Bezeichnung «Drehbewegung» wird dann verwendet, wenn Radkörper um ihre eigene Achse drehen, und die Bezeichnung «Umlaufbewegung» wird verwendet, wenn der Radkörper zusammen mit seiner Achse eine Lateralbewegung als Planetenrad ausführt.

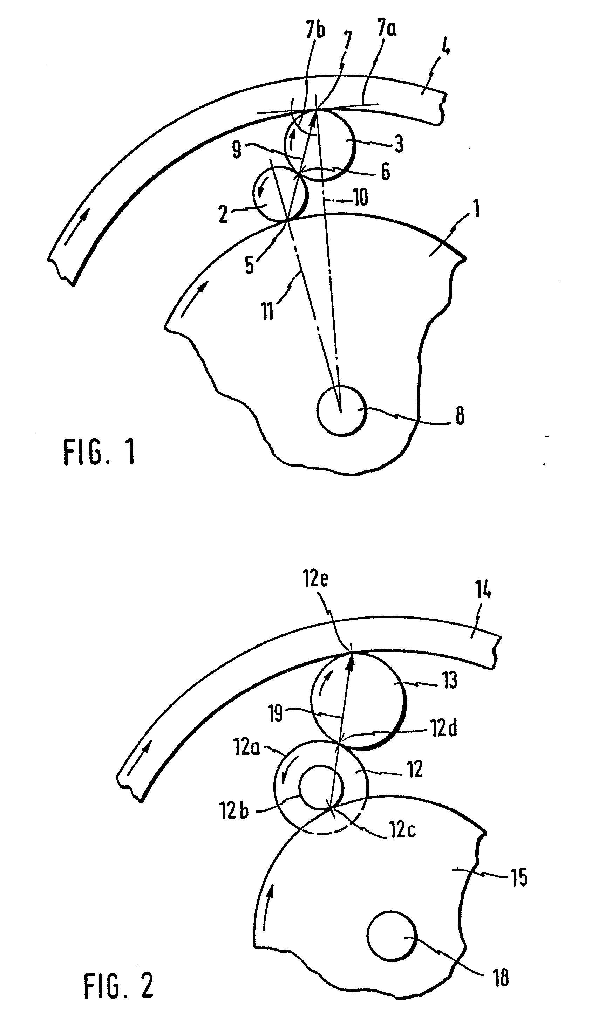

Fig. 1 zeigt ein Ausführungsbeispiel für die erfindungsgemässe Anordnung einer Radkette im Zwischenglied bei einem Planetengetriebe. Das als Zentralrad 1 ausgebildete Antriebsglied und das getriebene, ebenfalls um die Zentralachse 8 gelagerte, als Hohlrad 4 ausgebildete Abtriebsglied sind nur ausschnittsweise dargestellt. Die Umlaufräder 2 und 3 liegen mit ihren Achsen auf verschiedenen Zentralradiallinien 10 und 11. Bei dieser Ausführung sind die Umlaufräder freischwimmend gelagert und werden durch hier nicht gezeigte Massnahme – z.B. durch Achslagerung mit Bewegungstoleranz – in ihrer grundsätzlichen Anordnung und in Eingriff miteinander im Wälzpunkt 6 gehalten. Bei Belastung des Getriebes jedoch erhalten derartige Fixierungen keine Belastung durch Reaktionskräfte oder das eingeleitete Drehmoment. Das Grundprinzip des erfindungsgemässen Getriebes besteht darin, dass die aus den Umlaufrädern 2 und 3 bestehende Radkette eine kinematische Kette bildet, die das vom Zentralrad 1 über den Wälzpunkt 5 auf die Radkette eingeleitete Moment in der Funktion eines Stabes oder im Gleichgewicht stehenden Zwischenkörpers auf den kraftausleitenden Wälzpunkt 7 zum getriebenen Zentralrad überträgt, ohne dass die Umlaufräder dabei zu einer Eigendrehung, also Abwälzbewegung gegeneinander, angeregt werden. Der ungefähre Kraftverlauf wird schematisch durch die Linie 9 dargestellt, die auch als Kraftvektor bezeichnet werden kann. Sobald dieser Vektor angenähert durch die Wälzpunkte 5, 6 und 7 verläuft, befinden sich die Zahnräder in einem Zustand der Balance, in welchem sie eine gerichtete Kraft übertragen können, ohne zu kämmen. Bei diesem Vorgang spielen verschiedene Kräfte eine Rolle, die hier nicht näher erläutert werden; ein wesentlicher Unterschied zu konventionell gelagerten, kämmenden Umlaufrädern besteht jedoch darin, dass mindestens eine Kraftkomponente des Drehmomentes vom Wälzpunkt 5 aus in Abweichung von der gewöhnlich tangential verlaufenden Zahnflankenbeaufschlagung unter einem bestimmten Winkel über die Zahnkörper verläuft, wodurch unter Zusammenwirkung mit der Zuordnung der Umlaufräder und deren Grössen der beschriebene Gleichgewichtszustand erreicht wird. Unter Belastung und ohne Einleiten einer Steuerkraft auf die Umlaufradkette bzw. den Umlaufradsteg bildet das ganze aus Rad 1, 2, 3 und 4 bestehende Getriebe einen Block, der ohne zu kämmen umläuft. Erst bei einer auf die Umlaufradkette der Räder 2 und 3 induzierten Steuerkraft – die eine Bremskraft bis zum Stillstand oder eine darüber hinausgehende Antriebskraft sein kann, welche die Radkette entgegen der Drehrichtung des Antriebsrades bewegt, führen die Umlaufräder 2 und 3 eine Drehbewegung aus. Zur Regelung des Getriebes wird somit die üblicherweise auftretende Reaktionsbewegung des Zwischengliedes künstlich angeregt, wodurch dann das zwischen den Rädern 1 und 4 vorgegebene Standübersetzungsverhältnis zur Auswirkung kommt.

Beide Funktionen – die Kupplungsfunktion im Gleichgewichtszustand und die Übertragung des Momentes unter Überlagerung einer Relativbewegung des Zwischengliedes gegenüber den Aussengliedern (Zahnräder 1 und 4) – ermöglichen zusammengenommen eine stufenlose Drehzahlregelung zwischen den Rädern 1 und 4 zwischen den Bereichen ∞:1 (Stillstand des getriebenen Rades 4) und 1:1, bei dem das Getriebe als Block umläuft.

Die beschriebene Funktion ist nur dann möglich, wenn infolge richtiger Anordnung und Grösse der Räder die unter veränderter Richtung im Zwischenglied übertragenen Kräfte oder Kraftkomponenten in der Resultierenden in einem von 90° abweichenden spitzen Winkel 7b zur Schnittpunkttangente 7a zum Teilkreis des getriebenen Zentralrades – vorzugsweise im oder in der Nähe des von der Randkette kraftausleitenden Wälzpunktes 7 auf die Zahnflanken des getriebenen Zentralrades 4 – gerichtet sind.

Um zu vermeiden, dass durch die Radialkomponenten, die auf die Umlaufräder wirken, die Zahnflanken in unzulässiger Weise zusammengedrückt werden, werden die Räder des Getriebes bei dieser Ausführung mit mindestens einseitig am Zahnradkörper befestigten Zylinderflächen versehen, welche angenähert in der Teilkreisebene der Verzahnung liegen. Alternativ können auch koaxial neben der Verzahnung angebrachte drehbare Körper mit kreisförmiger Aussenkontur – insbesondere wälzgelagert auf der Radachse befestigt – angebracht werden. Auf diese Weise wird gleichzeitig der gewünschte Achsabstand der Zahnräder mit der entsprechenden Zahnflankentoleranz fixiert.

In Fig. 2 ist das gleiche Prinzip wie in Fig. 1 ausschnittsweise dargestellt, doch mit dem Unterschied, dass von den beiden Umlaufrädern 12 und 13 das mit dem Antriebsrad 15 in Eingriff stehende Umlaufrad 12 als ein koaxiales Doppelrad (Stufenrad) mit den beiden im Radius unterschiedlichen Zahnkränzen 12a und 12b ausgebildet ist. Der Grund für diese Massnahme ist darin zu sehen, dass sich bei dieser Ausführung der kinematische Gleichgewichtszustand der Radkette des Zwischengliedes nur innerhalb eines bestimmten Übersetzungsverhältnisses des Getriebes realisieren lässt. Wählt man das Übersetzungsverhältnis zu gross, so überwiegen die Kräfte der Abwälzbewegung, und es kommt zu einer Reaktionsbewegung des Zwischengliedes, bei der sich die Umlaufräder 12 und 13 an den um die Zentralachse drehbar gelagerten Zentralrädern 11 und 14 abwälzen. Bei zu hohem Übersetzungsverhältnis wird der Gleichgewichtszustand des Zwischengliedes gestört, da sich die Geometrie der Zahnradanordnung mit einer etwa durch die Wälzpunkte 12c, 12d und 12e gehenden Geraden 19 nicht mehr realisieren lässt.

Es sei darauf hingewiesen, dass das Getriebe auch dann in Umkehrfunktion arbeitet, wenn das Hohlrad 14 als treibendes Zentralrad und das Zentralrad 15 als getriebenes Zahnrad fungieren. In einem solchen Falle erfolgt die Regelung des Getriebes dadurch, dass das Zwischenglied zu einer Bewegung in Richtung Antriebsbewegung vorauseilend angetrieben wird. Grundsätzlich erfolgt die stufenlose Regelung bei dem Getriebeprinzip gem. den Figuren 1 und 2 dadurch, dass das Zwischenglied – bestehend aus der Umlaufradkette – durch Abbremsung oder durch ein zusätzliches Steuergetriebe zu einer Relativbewegung gegenüber der Antriebsbewegung des treibenden Zahnrades angeregt wird. Dabei kann das Zwischenglied zu einer derartig schnellen Drehbewegung entgegen der Antriebsdrehrichtung angeregt werden, dass das getriebene Glied (das getriebene Hohlrad 4 bzw. 14) stillsteht. Unabhängig vom Basisübersetzungsverhältnis des Getriebes ist es somit möglich, eine stufenlose Steuerung des Übersetzungsverhältnisses zwischen ∞:1 und 1:1 herbeizuführen. Das übertragene Drehmoment bleibt dabei im wesentlichen gleich.

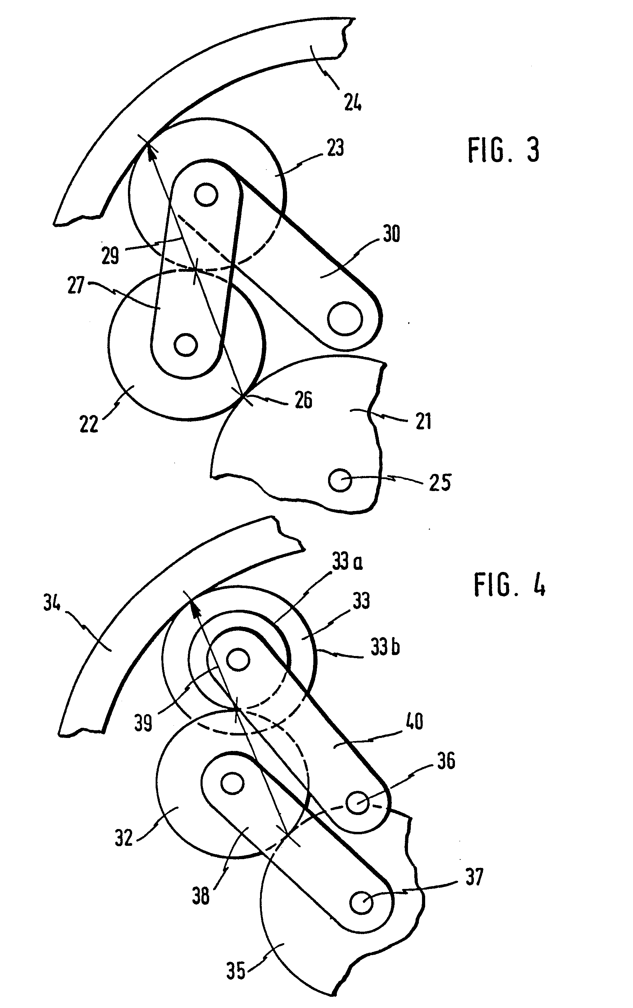

In Fig. 3 befindet sich die erfindungsgemäss ausgelegte Radkette, bestehend aus dem Umlaufrädern 22 und 23, an geeigneter Stelle des Getriebes zwischen dem Aussenrad 21 und dem Innenrad 24. Diese beiden Zahnräder 21 und 24 sind bei dieser Ausführung nicht koaxial angeordnet, sondern mindestens eines dieser Räder liegt exzentrisch und wird über weitere, nicht dargestellte Zwischenräder von der zentralen Welle angetrieben. Das bedeutet, dass das Getriebeprinzip grundsätzlich auch dann arbeitet, wenn eine Radkette in geeigneter Anordnung zwischen einem zur Zentralwelle exzentrischen und einem zur Zentralwelle zentrischen Rad angeordnet ist. Eine weitere Massnahme bei dieser Ausführung besteht darin, dass die Umlaufräder 22 und 23 sich nicht auf neben der Verzahnung befindlichen Teilkreiszylinderflächen berühren, sondern mittels eines Hilfssteges oder separaten Verbindungssteges 27 miteinander auf Achsabstand verbunden werden. Gleichzeitig ist das äussere Umlaufrad 23 über einen zugbelasteten separaten Hilfssteg 30 so gelagert, dass es die erforderliche Umlaufbewegung um die Getriebezentralachse 25 ausführen kann, während das innere Umlaufrad 22 der Radkette durch den Verbindungssteg 27 in der erforderlichen Position zum Nachbarrad 23 gehalten wird. Separate Verbindungsstege ermöglichen die erforderliche Bewegungstoleranz der Zahnräder zueinander ebenso wie eine periphere Berührung über Teilkreiszylinderflächen. Die Position des Umlaufrades 22 wird hier ausserdem nur noch durch die Berührung zum treibenden Zahnrad 22 gegeben. An dieser Berührungsstelle 26 ist es somit erforderlich, dass Teilkreiszylinder zur Vermeidung von unzulässigen Zahnflankenbelastungen vorgesehen sind.

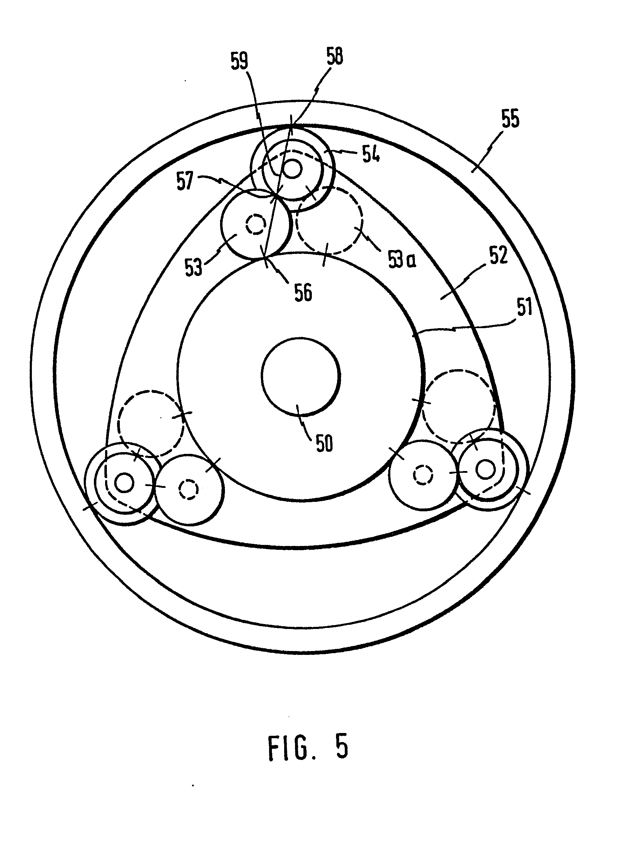

Fig. 4 zeigt eine ähnliche Anordnung wie diejenige gem. Fig. 3, jedoch mit dem Unterschied, dass das äussere Planetenrad 33 als koaxiales Doppelrad mit verschieden grossen Zahnkränzen 33a und 33b ausgebildet ist. Ausserdem ist das äussere Umlaufrad 33 über einen Hilfssteg 40 mit der Zentralachse 36 verbunden, um die das aussenliegende Abtriebsrad 34 drehbar gelagert ist, während die Achse des inneren Umlaufrades 32 über einen Hilfssteg 38 mit der Achse 37 des exzentrisch zur Zentralachse gelagerten Antriebsrades 35 verbunden ist. Der Zahnkranz 33a und der Zahnkranz des Umlaufrades 32 weisen somit wiederum Teilkreiszylinderflächen neben der Verzahnung auf. Alternativ zu dieser Ausführung können zusätzlich die beiden Umlaufräder mit einem Hilfssteg verbunden werden, so dass dann keine Teilkreiszylinderflächen erforderlich sind.

Fig. 5 zeigt ein Ausführungsbeispiel des Getriebesystems für die praktische Anwendung. Die zentrale, treibende Welle 50 ist mit dem treibenden Zentralrad 51 verbunden und stellt das Antriebsglied des Getriebes dar. Das Zwischenglied des Getriebes besteht aus dem Hauptsteg 52 und den darauf freischwimmend oder zum Teil fest gelagerten Umlaufrädern 53, 54 und 53a. Das getriebene Glied besteht aus dem Hohlrad 55, welches mit der getriebenen Welle verbunden ist. Das Umlaufrad 53a erfüllt bei dieser Ausführung die Aufgabe, dass das Getriebe sowohl rechts- als auch linksherum angetrieben werden kann, da es bei Drehrichtungswechsel die Funktion des Umlaufrades 53 übernimmt, während das Rad 53 dann nur leer mitläuft und umgekehrt.

Um die erfindungsgemässe Funktion zu ermöglichen, muss mindestens ein Rad der Planetenradkette, also das Umlaufrad 53 oder das Umlaufrad 54, freischwimmend gelagert sein. Freischwimmend heisst, dass die Lagertoleranz gegenüber dem Hauptsteg 52 so gross gewählt wird, dass eine Berührung der jeweils betroffenen Zahnräder auf Teilkreiszylinderflächen neben der Verzahnung unter Druck gewährleistet ist, und zwar im Falle der freischwimmenden Lagerung des Umlaufrades 53 in dem Wälzpunkt 56 mit dem treibenden Zentralrad 51 und in dem Wälzpunkt 57 mit dem Umlaufrad 54 oder im Falle der freischwimmenden Lagerung des Umlaufrades 54 in dem Wälzpunkt 57 mit dem Umlaufrad 53 und in dem Wälzpunkt 58 mit dem Abtriebsrad 55. Im Falle der freischwimmenden Lagerung beider Umlaufräder 53 und 54 erfolgt die Anlage unter Druck in allen drei Wälzpunkten 56, 57 und 58. Dadurch wird vermieden, dass die Achse bzw. Achsen des bzw. der jeweils freischwimmend gelagerten Rades bzw. Räder druckbelastet wird bzw. werden.

Die vorgeschilderte Umlaufradanordnung 53, 54, 53a ist über den Umfang gesehen gleichmässig verteilt dreifach vorgesehen.

Die Regelung des Getriebes nach dieser Ausführung erfolgt ebenso wie unter den vorangegangenen Figuren beschrieben. Ausgehend vom Kupplungspunkt des Getriebes, bei dem Antriebsglied, Zwischenglied und Abtriebsglied in gleicher Geschwindigkeit umlaufen, wird das Zwischenglied an seiner mitlaufenden Umlaufbewegung von aussen gehindert und stufenlos über den Stillstand hinaus in eine Gegendrehbewegung geführt, so weit, bis bei gleichbleibender Drehzahl der treibenden Welle das getriebene Hohlrad 55 stillsteht. Da für diese Steuerung ein Drehmoment praktisch nicht erforderlich ist, können hierzu kleine Zusatzgetriebe, Reibradgetriebe, hydrostatische oder hydrodynamische Getriebe, z.B. Axialkolbengetriebe oder auch regelbare Elektromotore, herangezogen werden. Der Bauaufwand und die Baugrösse sind in jedem Falle gering, da bei richtiger Anordnung der Räder eine Steuerleistung über die geringen Reibungskräfte hinaus nicht aufgebracht werden muss.

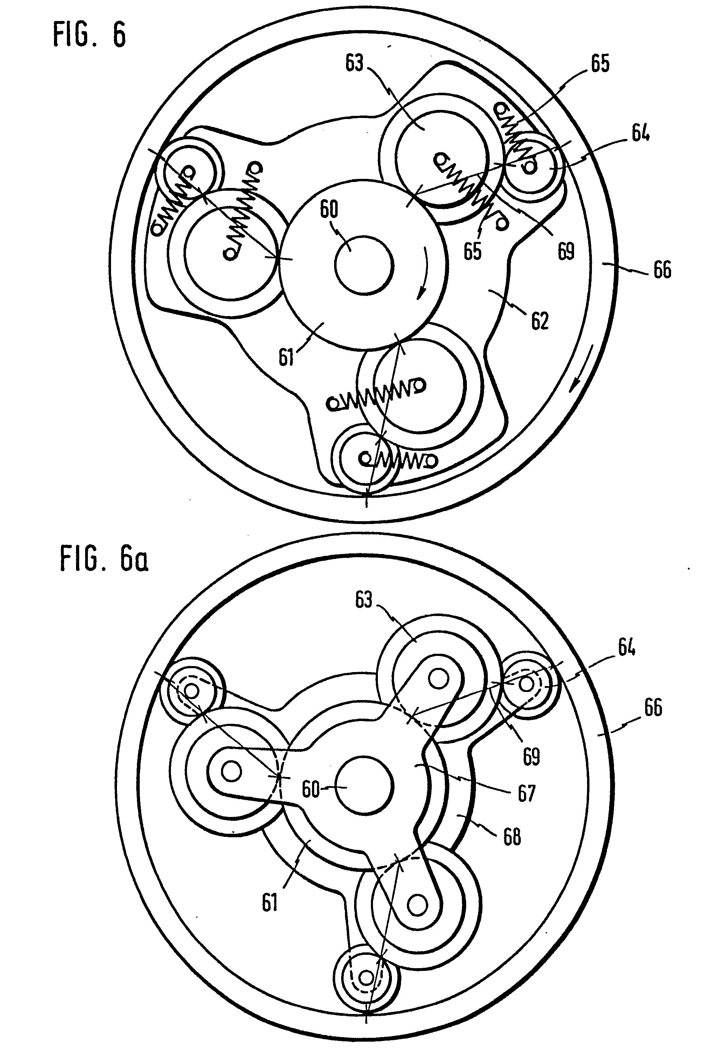

Fig. 6 stellt eine Alternative zu Fig. 5 dar, bei welcher sowohl das äussere Umlaufrad 64 und das innere Umlaufrad 63, die als Radkette zwischen dem Antriebsrad 61 und dem Abtriebsrad 66 angeordnet sind, als koaxiale Stufenräder mit zwei verschieden grossen Zahnkränzen ausgebildet sind. Die Umlaufräder sind bei dieser Ausführung beide freischwimmend gelagert und werden in ihrer Position dadurch gehalten, dass deren Achsen beidseitig jeweils über eine Feder 65 mit einem gemeinsamen Steg 62 in Verbindung stehen. Der Anpressdruck wird vorzugsweise dabei so gewählt, dass er grösser ist als die eventuell auftretenden Fliehkräfte bei höherer Drehzahl, die insbesondere das innere Umlaufrad 63 aus der Position schleudern könnten. Da sich die Zahnräder neben den Verzahnungen auf glatten Teilkreiszylinderflächen berühren, entstehen durch die Federkräfte keine nennenswerten Reibungsverluste. Ansonsten ist die Funktion die gleiche wie beim Ausführungsbeispiel nach Fig. 5.

In Fig. 6a sind alternativ zu Fig. 6 die Umlaufräder 63 und 64 nicht auf einem gemeinsamen Steg 62, sondern jeweils auf einem gesonderten Steg 67 bzw. 68 gelagert, welche beiden Stege gegeneinander beweglich zentral drehbar gelagert sind, wobei die Anlageposition ebenfalls durch Federn erfolgen kann, welche die beiden Stege 67 und 68 so gegeneinander drehen, dass die Umlaufräder 63 und 64 in ständiger Berührung bleiben.

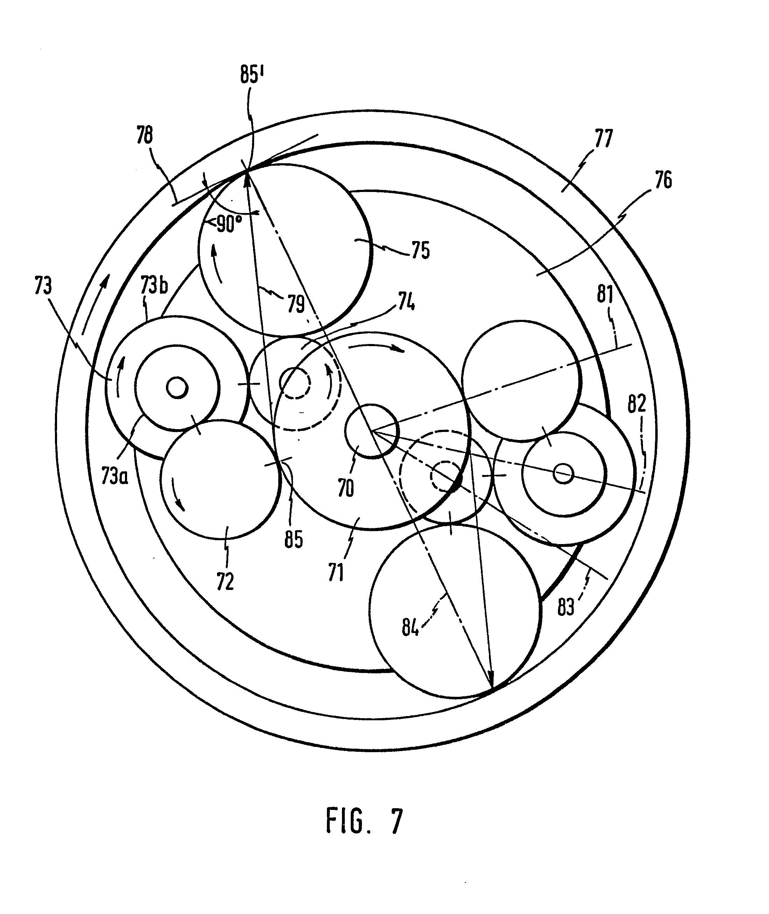

Bei dem Ausführungsbeispiel gemäss Fig. 7 ist das Getriebe so ausgelegt, dass relativ hohe Standübersetzungsverhältnisse erreicht werden können. Bei dieser Ausführung werden pro Radkette vier Umlaufräder 72, 73, 74 und 75 als Kette drehmomentschlüssig über Wälzpunkte verbunden und hinsichtlich Grösse und Lagerung so aufeinander abgestimmt, dass der Gleichgewichtszustand oder Kupplungspunkt des Getriebes entsteht. Die Umlaufräder sind bei dieser Ausführung in zwei funktionell verschiedene Radgruppen zusammengefasst. Die mittleren Umlaufräder 73 und 74 sind auf dem zentral gelagerten Steg 76 drehbar befestigt, während die Endräder 72 und 75 freischwimmend bzw. mit entsprechender Lagertoleranz vorgesehen sind. Das fest gelagerte Umlaufrad 73 ist als koaxiales Doppelrad mit zwei verschiedenen Zahnkränzen 73a und 73b ausgeführt, um das Übersetzungsverhältnis zwischen treibendem Zentralrad 71 und getriebenem Hohlrad 77 wieder etwas zu reduzieren. Auf diese Weise werden die in Drehrichtung auf das Zwischenglied wirkenden Reaktionskräfte erhöht, und die Umlaufräder können aus Platzgründen mit grösseren Durchmessern und das zentrale Sonnenrad 71 mit einem kleineren Durchmesser ausgeführt werden. Dadurch werden die Drehzahlen der Räder aneinander angepasst und der erfindungsgemässe Effekt des Kupplungspunktes verstärkt. Alle Getriebeausführungen, bei denen mehr als zwei Umlaufräder in der Radkette vorgesehen sind, bieten den Vorteil, dass die kinematischen Voraussetzungen für den Kupplungspunkt bei unbeeinflusstem Zwischenglied infolge der grösseren Variationsmöglichkeiten hinsichtlich Lage und Grösse der Umlaufräder besser erreicht werden. Ausserdem ist dadurch ein höheres Standübersetzungsverhältnis erreichbar. Im Prinzip gesehen übernehmen die beiden Umlaufräder 73 und 74 die Funktion eines Zwischenrades, da sie beide fest auf dem Steg gelagert sind. Lediglich die Anordnungsmöglichkeiten werden durch die Aufteilung in zwei fest gelagerte Einzelräder verbessert. Die Endräder 72 und 75 dagegen sind zumindest in der Radialposition durch den Zahneingriff mit den Zentralrädern 71 bzw. 77 in der Lage vorbestimmt, und nur der in Umfangsrichtung um die Zentralachse herum gesehene Achsabstand kann verändert werden. Nimmt man die Möglichkeit hinzu, dass ein Umlaufrad oder auch mehrere als koaxiale Doppelräder mit zwei Zahnkränzen ausgeführt sein können, so bieten sich verschiedene Korrekturmöglichkeiten, um die Kinematik zu verändern und das gewöhnlich auftretende Reaktionsmoment des Zwischengliedes zu neutralisieren. Insgesamt gesehen tritt auch hier das Phänomen auf, dass die Umlaufräder des Zwischengliedes eine kinematische Kette bilden, welche das im Wälzpunkt 85 zwischen dem antreibenden Sonnenrad 71 und dem inneren Umlaufrad 72 der Kette eingeleitete Drehmoment des treibenden Zentralrades 71 in der Funktion eines Stabes oder in Balance stehenden Zwischenkörpers gewissermassen linear auf den kraftausleitenden Wälzpunkt 85' zum getriebenen Hohlrad 77 überträgt. Dabei trifft die Kraftkomponente 79 in einem Winkel < 90° zur Schnittpunkttangente 78 im Teilkreis des getriebenen Zentralrades auf dessen Teilkreiszylinder bzw. Zahnflanken. Der Vektor 79 ist in dieser Figur nur zur Verdeutlichung zwischen dem Teilkreis des treibenden Rades 71 und dem kraftausleitenden Wälzpunkt 85' so gezeichnet. Man wird das im Rahmen der Umlaufradkette enthaltene Übersetzungsverhältnis dahingehend zu berücksichtigen haben, dass man einen grösseren Teilkreisdurchmesser des Antriebsrades 71 als theoretisch gegeben zugrundelegt, so dass der Vektor 79 an sich weiter zur Tangentialen 78 hin geneigt verläuft, was bedeutet, dass die radiale Belastung des abgetriebenen Rades 77 geringer ist und die tangentiale Kraftkomponente im Wälzpunkt 85' grösser ist, als sich dies aus der entsprechenden Zerlegung des gezeichneten Vektors 79 ergibt.

Mindestens eines der Umlaufräder der Radkette muss bei dieser Ausführung auf einer Zentralradiallinie – 81 oder 84 – liegen, die von den Zentralradlinien – 82 bzw. 83 – der Nachbarräder abweicht. Nur durch eine solche auch als schrägversetzte Anordnung zueinander zu bezeichnende Anordnung kann die erfindungsgemässe Funktion des Getriebes erreicht werden.

Um das vorgeschlagene Getriebe zu realisieren, gibt es eine ganze Reihe von Zuordnungen bezüglich Position und Grösse der Räder, die zu der gewünschten Funktion führen. Dies wird ganz besonders bei diesem Ausführungsbeispiel deutlich. Einige Alternativen bestehen darin, dass nur eines der Endräder der Radkette in der freischwimmenden Anlageposition zu den Nachbarrädern gehalten wird und die drei übrigen Umlaufräder zu einer auf dem Steg gelagerten Gruppe zusammengefasst sind. Der erfindungsgemässe Effekt wird jedoch verstärkt, wenn beide Endräder die erfindungsgemässe Anlageposition erhalten, weil dann auch das zweite Endrad eine in Drehrichtung des treibenden Zentralrades 71 wirkende Kraftkomponente hervorruft bzw. beide Endräder dazu beitragen, den Stillstand der Umlaufradkette ohne äussere Einwirkung auf diese zu gewährleisten. Durch das Überlappen der Räder 71 und 74 wird ebenfalls die gewünschte Funktion des Getriebes unterstützt, und auch in dieser Hinsicht sind viele Varianten denkbar, um den kinematischen Effekt sicherzustellen. Wie aus diesen Ausführungen ersichtlich, können viele mögliche Anordnungen der Zahnräder des Getriebes vorgesehen sein, deren Grösse und Lagerung aus Platzgründen nicht näher dargestellt sind. Dieser Umstand gilt insbesondere auch für alle die Ausführungen, die mehr als zwei Umlaufräder in der Radkette beinhalten.

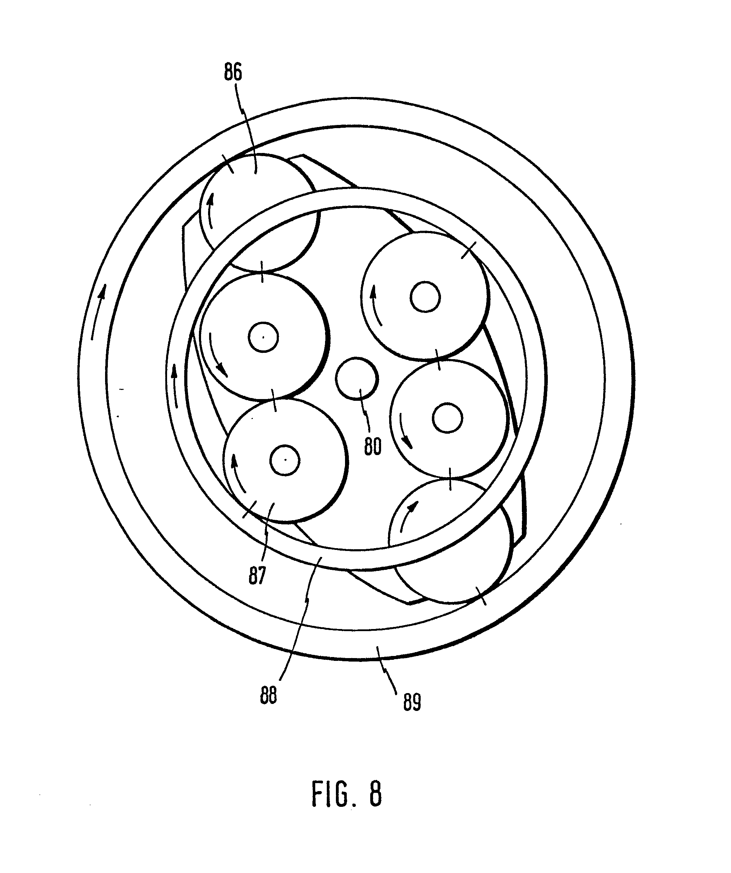

Fig. 8 zeigt eine Ausführung des Getriebes mit zwei Radketten von jeweils drei Umlaufrädern. Vorzugsweise sind die Endräder 86 und 87 der Radkette oder eines der Endräder freischwimmend bzw. mit Lagertoleranz gehalten. Die Besonderheit dieser Ausführung besteht darin, dass die Zentralräder 88 und 89 als innenverzahnte Räder, also Hohlräder, ausgebildet sind. Für die Funktion gilt grundsätzlich das gleiche, wie in der Beschreibung für die vorangehenden Ausführungsbeispiele aufgezeigt. Alternativ können ein oder zwei Umlaufräder als Stufenräder und die Zentralräder gleich oder annähernd gleich gross ausgebildet werden.

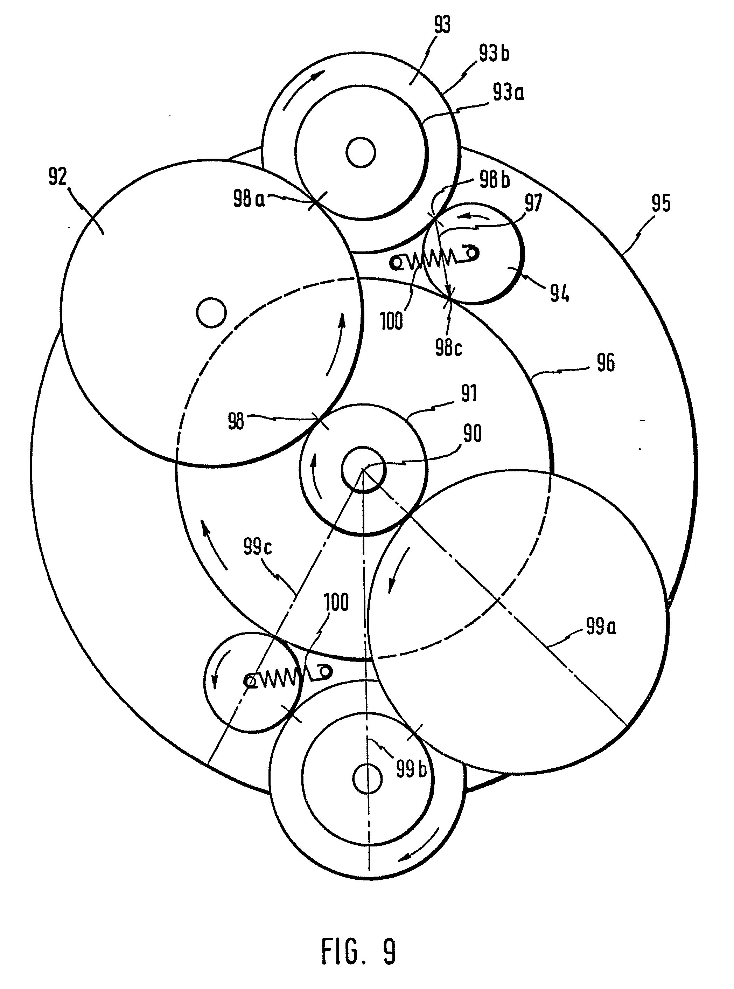

Fig. 9 stellt wiederum eine Ausführungsform des Getriebes dar, welche viele Variationsmöglichkeiten bietet. Das zentrale, mit der Antriebswelle 90 gekoppelte Sonnenrad 91 kämmt mit dem Umlaufrad 92 im Wälzpunkt 98, welches über den Wälzpunkt 98a mit dem weiteren Umlaufrad 93 verbunden ist, das über den Wälzpunkt 98b mit dem dritten Umlaufrad 94 kämmt, das freischwimmend in der Anlageposition zu den Nachbarrädern, nämlich dem Umlaufrad 93 und dem Abtriebsstirnrad 96, gehalten ist. Damit überträgt das Umlaufrad 94 das eingeleitete Drehmoment vom Wälzpunkt 98b zum kraftausleitenden Wälzpunkt 98c auf das getriebene Zentralrad 96. Auch bei dieser Ausführung, bei der die Umlaufräder ebenfalls auf mindestens zwei verschiedenen zentralradialen Linien 99a, 99b oder 99c liegen müssen, wird das freischwimmend gehaltene Rad 94 in vorteilhafter Weise ähnlich wie in Fig. 6 durch eine Feder 100 in der Position gehalten, um den Fliehkräften entgegenzuwirken. Abweichend von der Auslegung mit einem koaxialen Stufenrad 93 mit den beiden Zahnkränzen 93a und 93b können auch die übrigen Umlaufräder als Stufenräder ausgebildet sein, so dass bei entsprechender Wahl der Zahnkranzdurchmesser der Stufenräder die Zentralräder 91 und 96 auch gleich gross ausgeführt sein können. Eine weitere Alternative besteht darin, dass das Umlaufrad 92 ebenfalls freischwimmend in Anlageposition gehalten ist und nur das Doppelrad 93 auf dem Steg 95 durch Lagerung fixiert ist.

Bei der dargestellten Ausführung sind die Umlaufräder in zwei Radgruppen aufgeteilt, wobei die eine Radgruppe aus den gelagerten Umlaufrädern 92 und 93 besteht und die zweite Radgruppe als das einzelne Umlaufrad 94 angesehen werden kann. Dieses unter radialem Anlagedruck an den Nachbarrädern gehaltene Umlaufrad 94 ist – wie bei den anderen Ausführungsbeispielen – für die Übertragung einer Kraftkomponente in Abweichung von den in tangentialer Richtung auf die Zahnflanken wirkenden Kräften erforderlich. Der Verlauf der veränderlichen Kraftrichtung kann in einer Komponente bzw. auch in der Resultierenden etwa durch die Linie 97 dargestellt werden.

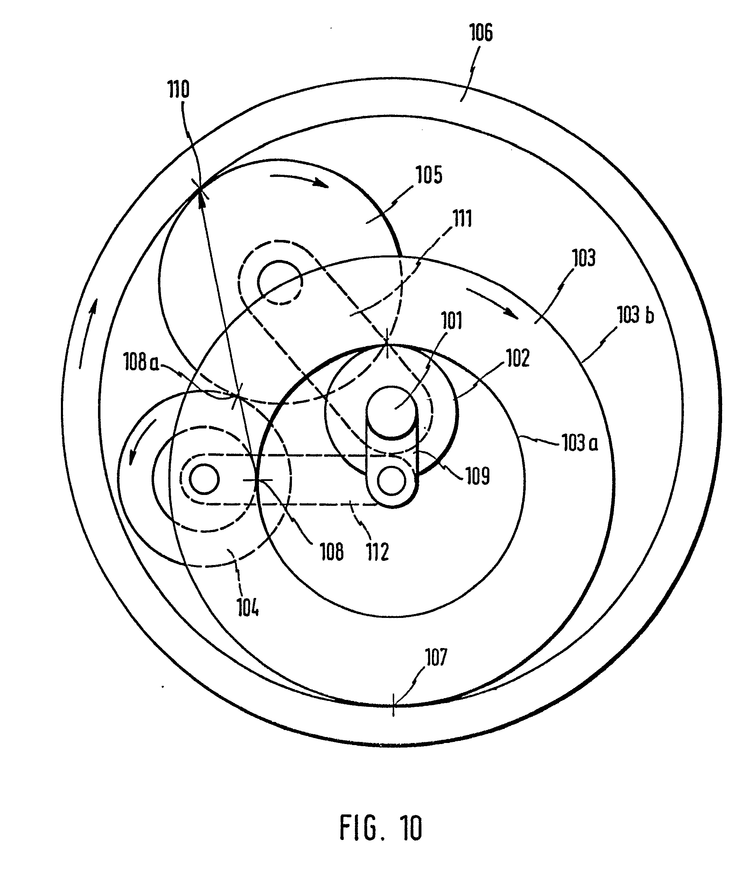

Das Ausführungsbeispiel gemäss Fig. 10 zeigt zwei Umlaufräder 104 und 105, die zwischen den exzentrisch zueinanderliegenden Rädern 103 und 106 angeordnet sind. Das besondere dieser Ausführung besteht darin, dass das exzentrisch liegende Umlaufrad 103 sowohl über die Radkette der Planetenräder 104 und 105 als auch über den Wälzpunkt 107 zwischen seinem äusseren Zahnkranz 103b und dem Hohlrad 106 drehmomentschlüssig mit diesem verbunden ist. Sobald das Umlaufrad 103 (Hauptplanetenrad) angetrieben oder – z.B. mittels Kurbel 109 – in eine Umlaufbewegung versetzt wird, baut sich zwischen dem Wälzpunkt 108, zwischen dem Hauptplanetenrad 103 und dem inneren Umlaufrad 104 und dem Wälzpunkt 110 zwischen dem äusseren Umlaufrad 105 und dem Hohlrad 106 eine linear verlaufende Schubkraft auf, die ein Abrollen des Umlaufrades 103 auf dem Hohlrad 106 verhindert, sofern das Getriebe nicht zusätzlich von aussen beeinflusst wird. Da das Übersetzungsverhältnis zwischen dem äusseren Zahnkranz 103b des Umlaufrades 103 und dem Hohlrad 106 das gleiche ist wie zwischen dem inneren Zahnkranz 103a und dem Hohlrad 106 (das Stufenrad 104 gleicht die Differenz der Zahnkränze des Rades 103 aus), kann die Dreh- oder Umlaufbewegung des Zwischengliedes bei stehenden, nicht kämmenden Umlaufrädern von aussen reduziert werden, so dass dann ein Kämmen der Umlaufräder einsetzt und das Übersetzungsverhältnis zum Tragen kommt, das zwischen dem Rad 103 und dem Hohlrad 106 vorgegeben ist. Dabei kann das Hauptumlaufrad 103 auch durch ein zusätzliches, auf der Zentralwelle 101 befestigtes zentralgelagertes Zahnrad 102 oder durch andere zwischengeschaltete Zahnräder von der zentralen treibenden Welle 101 aus angetrieben werden. Der Antrieb des Hauptplanetenrades 103 kann jedoch auch zentral über eine von der Getriebezentralachse ausgehenden Gelenkwelle erfolgen.

Diese Ausführung verdeutlicht, dass das erfindungsgemässe Übertragungsprinzip auch zwischen nicht-koaxialen Rädern zur Anwendung gelangen kann. Die Regelung des Getriebes erfolgt dadurch, dass eine entsprechende Steuerkraft auf einen der Stege 111 oder 112 induziert wird, mit denen das äussere Umlaufrad 105 um die Zentralachse 101 und das innere Umlaufrad 104 um die Achse des Hauptplanetenrades 103 drehbar verbunden sind.

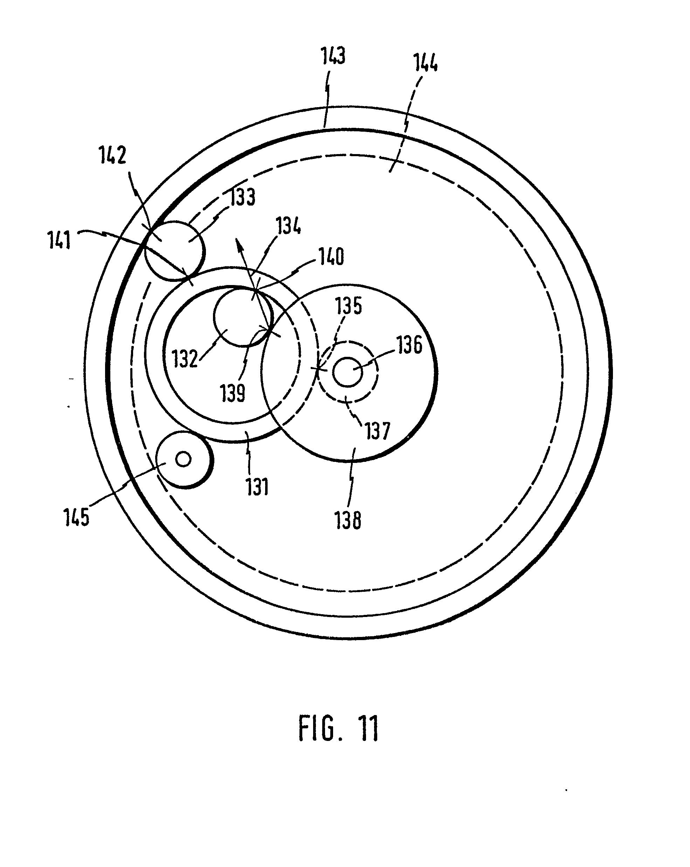

Fig. 11 zeigt eine Ausführung der Erfindung, bei welcher zwischen die vorzugsweise freischwimmend gelagerten Umlaufräder 132 und 133 ein Zahnring 131 mit Innen- und Aussenverzahnung gelegt ist, um dadurch die Neutralisation der Reaktionsbewegung des Zwischengliedes unter verringerter Belastung der Teilkreiszylinder und Zahnflanken herbeizuführen.

Durch diese grundsätzliche Anordnung entsteht ein zusätzlicher Kraftvektor in Antriebsdrehrichtung, den man mit dem Pfeil 134 ungefähr lokalisieren kann.

Der Zahnring 131 kann gleichzeitig im Berührungspunkt 135 gegen die Zentralachse 136 unter Zwischenschaltung eines Wälzlagers 137 abgestützt werden.

Das treibende Zentralrad 138 leitet das Drehmoment im Wälzpunkt 139 auf das Umlaufrad 132 ein, und die Kraft wird dann über die Wälzpunkte 140, 141 und 142 auf das zentrale, getriebene Hohlrad 143 geleitet.

Die hier gezeigte konstruktive Massnahme kann vielfältig variiert werden. So kann z.B. der Zahnring 131 die Zentralachse 136 auch umschliessen und sich an dieser mit einem Innenteilkreiszylinder abstützen. In anderer Ausführung kann der Zahnring durch Gleitrollen (z.B. Rolle 145), die innen oder aussen auf glatten Flächen abrollen, in einer bevorzugten Position gegenüber dem Steg 144 fixiert sein, auf dem dann vorteilhaft mindestens auch eines der Umlaufräder gelagert ist.

Grundsätzlich können bei der gezeigten Ausführung jedoch alle Umlaufräder und der Zahnring 131 ähnlich wie in den Fig. 1, 2, 5 und 6 freischwimmend ohne Achslagerung auf dem Steg gehalten sein.

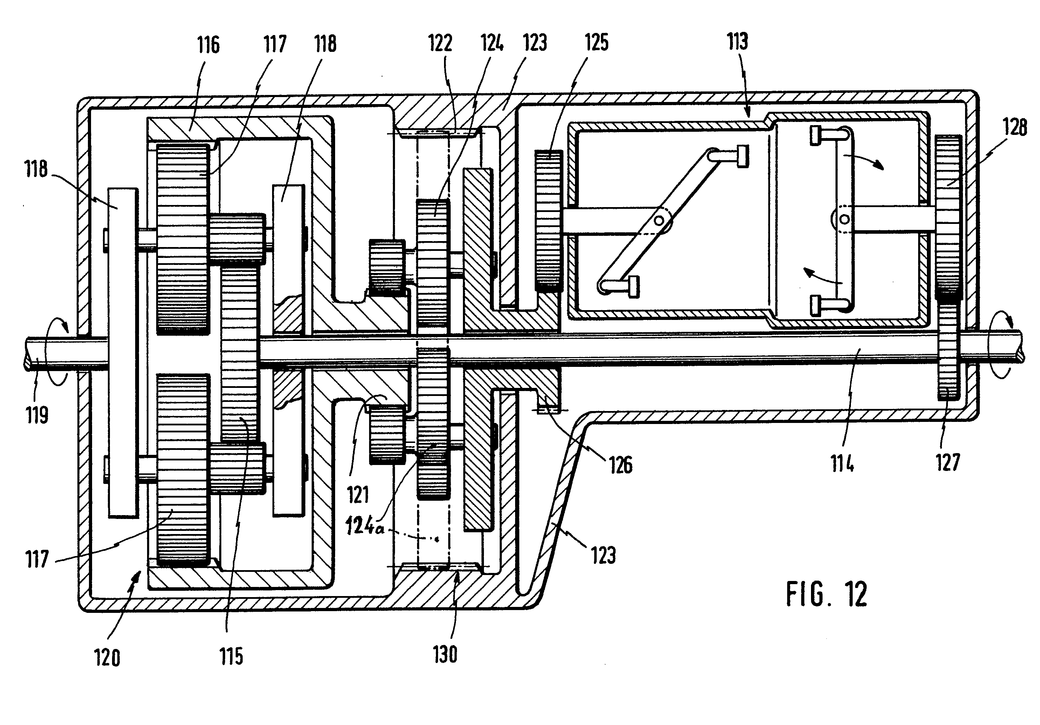

Fig. 12 zeigt ein schematisch im Längsschnitt dargestelltes Gesamtgetriebe, das insbesondere für den Antrieb von Fahrzeugen Verwendung finden kann. Im grundsätzlichen Aufbau besteht dieses Gesamtgetriebe aus einem konventionellen Umlaufrädergetriebe 120, einem nach dem Erfindungsprinzip aufgebauten Regelgetriebe 130 und einem für die Drehzahlregelung des Zwischengliedes des Regelgetriebes erforderlichen Steuergetriebe 113. Das Drehmoment wird über die treibende Welle 114 in das treibende Zahnrad 115 eingeleitet und bei feststehendem Hohlrad 116 durch Abwälzbewegung der Planetendoppelräder 117 sowohl an dem treibenden Zahnrad 115 als auch an dem Hohlrad 116 durch Eingriff der Achsen der Planetendoppelräder 117 in einen Abtriebssteg 118 auf diesen übertragen, welcher mit der getriebenen Welle 119 verbunden ist. Zur stufenlosen Drehzahl- und Drehmomentveränderung des Umlaufrädergetriebes 120 ist das Hohlrad 116 mit dem erfindungsgemässen Getriebe 130 drehmomentschlüssig verbunden. Dazu ist an dem Hohlrad 116 ein zentrales Zahnrad 121 angebracht, welches die Funktion des treibenden Zentralrades für das Getriebe 130 inne hat. Das als Hohlrad 122 ausgebildete getriebene Zentralrad des Getriebes 130 ist mit dem Gehäuse 123 fest verbunden, während das aus den Umlaufrädern und deren Steg bestehenden Zwischen- bzw. Steuerglied 124 des Getriebes 130 von einem Axialkolbengetriebe 113 über die Zahnräder 125 und 126 drehzahlvariabel gesteuert wird. Wie bereits beschrieben, muss für diese Steuerung des Zwischengliedes 124 ein kinematisch bedingtes Drehmoment nicht überwunden werden. Das Steuergetriebe 113, bestehend aus Axialkolbenpumpe und Motor, wird von der Hauptwelle 114 aus über Stirnräder 127 und 128 angetrieben. Der besseren Übersicht wegen sind die Zahnräder für den Rückwärtsgang, die vor-, zwischen- oder nachgeschaltet werden können, sowie die erforderlichen Zahnräder für den Betriebszustand in der Bergabfahrt eines Fahrzeuges (Fahrzeugtreibmotor) nicht eingezeichnet. Da das Getriebe gemäss der Erfindung in der Lage ist, Drehmomente gegen ein festes Gehäuse stufenlos abzustützen, kann gemäss Ausführung dieses Getriebes über das Reaktionsglied des Umlaufrädergetriebes 120 eine Drehmomentwandlung, wie sie bei Fahrzeugen erforderlich ist, erreicht werden.

**Patentansprüche**

1. Umlaufgetriebe mit einem Antriebsglied, einem Abtriebsglied und einem Steuerglied, dessen Umlaufgeschwindigkeit relativ zu derjenigen des Antriebsgliedes und/oder des Abtriebsgliedes veränderbar ist, mit ständig im Eingriff befindlichen Zahnrädern und mit einem vorgegebenen Standübersetzungsverhältnis, das durch ein Übersetzungsverhältnis zwischen den Zahnrädern der Aussenglieder (1; 15; 21; 35; 51; 61; 71; 88; 91; 102; 121 und 4; 14; 24; 34; 55; 66; 77; 89; 96; 106; 122) und/oder durch wenigstens eine Übersetzungsstufe innerhalb des Umlaufräder (2, 3; 12, 13; 22, 23; 32, 33; 53, 53a, 54; 63, 64; 72, 73, 74, 75; 86, 87; 92, 93, 94; 104, 105; 124, 124a) aufweisenden Zwischengliedes bestimmt ist, welches die Aussenglieder getrieblich derart verbindet, dass diese in gleicher Richtung drehen, dadurch gekennzeichnet, dass eine zwischen dem einen Aussenglied (1; 15; 21; . . .) und dem anderen Aussenglied (4; 14; 24; . . .) zwischengeschaltete Umlaufradkette, deren Achsen auf wenigstens zwei voneinander abweichenden Radiallinien (10, 11; 81, 82, 83, 84; 99a, b, c) der Zentralachse (8; 18; 25; 36; 50; 60; 70; 80; 90; 101) liegen, derart angeordnet, gelagert und in der Grösse der Einzelräder so bemessen ist, dass wenigstens eines – vorzugsweise am Ende der Radkette befindliches – der Umlaufräder (2, 3; 12, 13; 22, 23; . . .) gegenüber dem bzw. den anderen schwimmend gelagert ist, so dass es bei belastetem Getriebe an den Nachbarrädern unter radialer oder zumindest eine Radialkomponente aufweisender Druck- bzw. Zugbelastung zur Abstützung gelangt und dass ohne Einleitung einer Steuer- bzw. Bremskraft auf das Zwischenglied eine Reaktionsbewegung desselben zu den Aussengliedern wenigstens annähernd verhindert ist.

2. Getriebe nach Anspruch 1, dadurch gekennzeichnet, dass die Abstützung unter Druck- bzw. Zugbelastung gegenüber den Nachbarrädern wenigstens teilweise durch die auf das Umlaufrad (2, 3; 12, 13; 22, 23; 32, 33; 53, 54; 63, 64; 72, 73, 74, 75; 86, 87; 92, 93, 94; 104, 105; 124, 124a) wirkenden Reaktionskräfte bei belastetem Getriebe verursacht ist.

3. Getriebe nach Anspruch 1 oder 2, dadurch gekennzeichnet, dass die schwimmende Lagerung des unter – insbesondere radialer – Druck- oder Zugbelastung an den Nachbarrädern abgestützten Umlaufrades (2, 3; 12, 13; 22, 23; 32, 33; 53, 54; 63, 64; 72, 73, 74, 75; 86, 87; 92, 93, 94; 104, 105; 124, 124a) durch entsprechend spielbehaftete Lagerung oder durch Führung entlang wenigstens einer Bahn versetzbar gebildet ist, derart, dass eine die auf den Radkörper wirkenden Reaktionskräfte abstützende zentrale Achslagerung des Umlaufrades auf einem mit mindestens dem benachbarten Umlaufrad gemeinsamen, zentral gelagerten Steg entfällt und eine Anregung zu einer Eigendrehung desselben und damit eine Reaktionsumlaufbewegung des Zwischengliedes relativ zur Umlaufbewegung des Antriebsgliedes bzw. einen Aussengliedes (1; 15; 21; 35; 51; 61; 71; 88; 91; 102; 121) und des Abtriebsgliedes bzw. des anderen Aussengliedes (4; 14; 24; 34; 55; 66; 77; 89; 96; 106; 122) – mindestens annähernd – vermieden wird.

4. Getriebe nach einem der Ansprüche 1 bis 3, dadurch gekennzeichnet, dass mindestens eine Komponente des auf das Zwischenglied eingeleiteten Momentes in einer von der Tangentialen, bei Abwälzbewegung auftretenden Zahnflankenbeaufschlagung abweichenden Richtung auf den Radkörper des Umlaufrades (2, 3; 12, 13; 22, 23; 32, 33; 53, 54; 63, 64; 72, 73, 74, 75; 86, 87; 92, 93, 94; 104, 105) wirkt, so dass – in Zusammenwirkung mit den übrigen Umlaufrädern – das Zwischenglied bei von aussen unbeeinflusster Funktion resultierend die Funktion einer – in mindestens angenäherter Balance stehender – kinematischen Kette für die Übertragung einer, insbesondere streckenweise linearen, Kraftkomponente bzw. eines Kraftvektors erhält, wodurch bei gleichzeitiger Abstimmung der Radpositionen und -grössen eine Neutralisation der Abwälzbewegung der Umlaufräder bewirkt ist.

5. Getriebe nach einem der Ansprüche 1 bis 4, dadurch gekennzeichnet, dass die Anordnung und Grösse der Räder so aufeinander abgestimmt ist, dass die unter veränderter Richtung im Zwischenglied übertragenen Kräfte oder Kraftkomponenten in der Resultierenden in einem von 90° abweichenden, spitzen Winkel (7b) zur Schnittpunkttangente (7a; 78) zum Teilkreis des getriebenen Zentralrades (4; 14; 24; 34; 55; 66; 77; 89; 96; 106; 122) – vorzugsweise im oder in der Nähe des von der Radkette kraftausleitenden Wälzpunktes (7; 85'; 98c; 110) – auf die Zahnflanken des getriebenen Zentralrades (4; 14; 24; 34; 55; 66; 77; 89; 96; 106; 122) gerichtet sind.

6. Getriebe nach einem der Ansprüche 1 bis 5, dadurch gekennzeichnet, dass die Druck- oder Zugkräfte zu wenigstens einem der Nachbarräder jeweils über einen die Radachsen verbindenden, separaten Steg (27, 30; 40; 68; 111) verlaufen.

7. Getriebe nach einem der Ansprüche 1 bis 6, dadurch gekennzeichnet, dass die Umlaufradkette des Zwischengliedes in mindestens zwei Radgruppen (92, 93 und 94) aufgeteilt ist, von denen wenigstens eine (92, 93) auf einem separaten, gegen die Position der anderen Radgruppe (94) beweglichen, vorzugsweise um die Getriebezentralachse (90) drehbaren Steg (95) gelagert ist, wobei eine Radgruppe auch aus einem Umlaufrad (94) – insbesondere einem Endrad der Radkette – bestehen kann.

8. Getriebe nach einem der Ansprüche 1 bis 7, dadurch gekennzeichnet, dass die versetzbare Anordnung mindestens eines Umlaufrades (22, 23; 32, 33; 63, 64; 104, 105) dadurch erzielt wird, dass das Umlaufrad auf einem separaten Hilfssteg (27, 30; 38, 40; 67, 68; 111, 112) gelagert ist, dessen Umlauf- bzw. Drehachse auf dem Hauptplanetenträger für die Radkette, insbesondere im Mittelpunkt eines benachbarten Zahnrades, oder auf der Getriebezentralachse liegt.

9. Getriebe nach einem der Ansprüche 1 bis 8, dadurch gekennzeichnet, dass die druck- bzw. zugbelastete Anlage des Umlaufrades (63, 64; 94) wenigstens teilweise durch Federn (65; 100) oder andere Spannmittel sichergestellt ist.

10. Getriebe nach einem der Ansprüche 1 bis 9, dadurch gekennzeichnet, dass die Berührung unter Druckbelastung über feste, neben der Verzahnung vorgesehene, angenähert in der Teilkreisebene der Verzahnung liegende Zylinderflächen oder durch koaxiale, neben der Verzahnung angebrachte, drehbare Körper mit kreisförmiger Aussenkontur, beispielsweise wälzgelagert, erfolgt.

11. Getriebe nach einem der Ansprüche 1 bis 10, dadurch gekennzeichnet, dass eines der Zahnräder der Radkette des Zwischengliedes direkt – z.B. über eine Gelenkwelle – oder indirekt über vorgeschaltete Räder von der treibenden Welle angetrieben ist.

12. Getriebe nach einem der Ansprüche 1 bis 11, dadurch gekennzeichnet, dass eine Radkette von zwei, vier oder mehr Zahnrädern (2, 3; 12, 13; 53, 54; 63, 64; 72, 73, 74, 75; 103, 104, 105; 131, 132, 133) zwischen einem zentralen, aussenverzahnten Sonnenrad (1; 15; 51; 61; 71; 102; 138) und einem zentralen, innenverzahnten Hohlrad (4; 14; 55; 66; 77; 106; 143) angeordnet ist.

13. Getriebe nach einem der Ansprüche 1 bis 12, dadurch gekennzeichnet, dass mindestens ein Umlaufrad (12; 33; 54; 63, 64; 73; 93; 104) als Stufenrad mit zwei koaxialen, fest verbundenen Zahnkränzen (12a, 12b; 33a, 33b; 73a, 73b; 93a, 93b) mit verschiedenen Durchmessern ausgelegt ist, wobei der krafteinleitende Wälzpunkt (12c; 98a; 108) auf dem einen und der kraftausleitende Wälzpunkt (12d; 98b; 108a) auf dem anderen, vorzugsweise grösseren, Zahnkranz liegt.

14. Getriebe nach einem der Ansprüche 1 bis 13, dadurch gekennzeichnet, dass zwischen einem treibenden, als Aussenzahnrad ausgebildeten, zentralen Sonnenrad (71) und einem getriebenen, als Innenzahnrad (Hohlrad) ausgebildeten, ebenfalls zentral gelagerten Sonnenrad (77) eine Radkette von vier hintereinander geschalteten, miteinander kämmenden Umlaufrädern (72, 73, 74, 75) derart angeordnet ist, dass wenigstens ein Umlaufrad (72, 75), vorzugsweise das äussere und/oder das innere Endrad der Radkette, sich in Bezug auf die mit ihm kämmenden Nachbarräder (73, 74), vorzugsweise ohne zentrale Lagerung auf dem Hauptplanetenträger, in einer Berührungsposition unter Anlagedruck befindet, während die übrigen Umlaufräder (73, 74) mit ihren Achsen auf einem um die Zentralwelle (70) umlaufenden Planetenträger (76) gelagert sind.

15. Getriebe nach Anspruch 14, dadurch gekennzeichnet, dass mindestens ein Umlaufrad der Radkette, vorzugsweise das dem Endrad (75) vorgeschaltete Umlaufrad (74), so angeordnet ist, dass es das zentrale treibende Sonnenrad (71) in axialer Projektion gesehen überlappt.

16. Getriebe nach einem der Ansprüche 1 bis 13, dadurch gekennzeichnet, dass in einem als treibendes oder getriebenes Glied ausgelegten Hohlrad (106) eine Radkette von drei hintereinander geschalteten, miteinander kämmenden Planetenrädern (103, 104, 105) so angeordnet ist, dass ein mit seiner Stirnfläche die Hauptachse (101) des Getriebes überschneidendes Doppel-Hauptplanetenrad (103) einerseits mit einem grösseren Zahnkranz (103b) über dem zugehörigen Wälzpunkt (107) und andererseits durch einen zweiten Kraftfluss über den kleineren Zahnkranz (103a) und ein Zwischenplanetenrad (104) sowie diesem nachgeschalteten weiteren Planetenrad (105) über die zugehörigen Wälzpunkte (108, 108a, 110) mit dem Hohlrad (106) drehmomentschlüssig verbunden ist, wobei entweder das Zwischenplanetenrad (104) oder das weitere Hilfsplanetenrad als koaxiales Doppelrad (104) mit der gleichen Teilkreisdifferenz der Zahnkränze wie die Teilkreisdifferenz der koaxialen Zahnkränze (103a, 103b) des Hauptplanetenrades (103) ausgebildet ist.

17. Getriebe nach Anspruch 16, dadurch gekennzeichnet, dass das Hauptplanetenrad (103) entweder über seine Achse durch einen auf der Zentralwelle (101) drehenden Exzenter (Kurbel 109) oder mittels eines auf der Zentralachse (101) gelagerten oder befestigten Zahnrades (102) angetrieben ist.

18. Getriebe nach einem der Ansprüche 1–17, dadurch gekennzeichnet, dass das Getriebe (130) das Steuergetriebe für das Reaktionsglied (116) eines konventionellen Planetengetriebes (120) bildet.

19. Getriebe nach Anspruch 18, dadurch gekennzeichnet, dass das treibende Glied (121) des Getriebes (130) mit dem Reaktionsglied (106) des konventionellen Planetengetriebes (120) verbunden und das getriebene Glied (122) des Getriebes (130) gehäusefest verankert ist, während das Zwischenglied (124) des Getriebes (130) durch eine geeignete Vorrichtung in der Drehzahl steuerbar ist.

20. Getriebe nach einem der Ansprüche 1–19, dadurch gekennzeichnet, dass das treibende Glied als getriebenes und das getriebene Glied als antreibendes einsetzbar ist, während die Steuerbewegungsrichtung unverändert bleibt.

21. Getriebe nach einem der Ansprüche 1–20, dadurch gekennzeichnet, dass wenigstens ein Umlaufrad (53, 53a) symmetrisch in Doppelanordnung derart vorgesehen ist, dass sich das Getriebe wahlweise in der einen oder in der anderen Umlaufrichtung betreiben lässt.

22. Getriebe nach einem der Ansprüche 1 bis 21, dadurch gekennzeichnet, dass zwischen mindestens einem Umlaufrad (132) und einem Nachbarrad (133) zu diesem ein – vorzugsweise sich gegen die Zentralachse (136) zusätzlich drehbar abstützender – Zahnring (131) mit Innen- und Aussenverzahnung derart zwischengeschaltet ist, dass das Umlaufrad (132) mit dem einen Zahnkranz und das Nachbarrad mit dem anderen Zahnkranz desselben kämmt.

23. Getriebe nach Anspruch 21, dadurch gekennzeichnet, dass der Zahnring (131) mindestens einen weiteren Abstützpunkt – vorzugsweise an einem der übrigen Zahnräder des Getriebes oder an steggelagerten Stützrollen (145) – aufweist.

24. Getriebe nach einem der Ansprüche 1 bis 23, dadurch gekennzeichnet, dass die Umlaufradkette aus drei hintereinandergeschalteten Umlaufrädern besteht und zwischen zwei – vorzugsweise verschieden grossen – Zentralhohlrädern (88, 89) angeordnet ist, wobei wenigstens eines der Umlaufräder als Stufenrad mit zwei fest verbundenen, verschieden grossen Zahnkränzen ausgebildet sein kann.

## Claims

1. An epicyclic gear having a driving member, a driven member and a control member, the speed of circulation of which is variable in relation to that of the driving member and/or of the driven member, having gear-wheels which are constantly in engagement and having a predetermined static transmission ratio which is determined by a transmission ratio between the gear-wheels of the outer members (1; 15; 21; 35; 51; 61; 71; 88; 91; 102; 121 and 4; 14; 24; 34; 55; 66; 77; 89; 96; 106; 122) and/or by at least one stage within the intermediate member which comprises planetary wheels (2, 3; 12, 13; 22, 23; 32, 33; 53, 53a; 63, 64; 72, 73, 74, 75; 86, 87; 92, 93, 94; 104, 105; 124; 124a) and connects the outer members in a geared manner so that these rotate in the same direction, characterised in that a chain of planetary wheels, which is interposed between the one outer member (1; 15; 21; . . .) and the other outer member (4; 14; 24; . . .) and the axes of which lie on at least two radii (10, 11; 81; 82, 83, 84; 99a, b, c) of the central axis (8; 18; 25; 36; 50; 60; 70; 80; 90; 101) differing from one another, is so disposed and mounted and the size of the individual wheels is so proportioned that at least one of the planetary wheels (2, 3; 12, 13; 22, 23; . . .) – preferably situated at the end of the wheel chain – is mounted floating in relation to the other or others so that, when the gear is loaded, said at least one wheel comes to be supported against the neighbouring wheels under compressive or tensile loading which is radial or at least has a radial component and that without introduction of a control force or braking force into the intermediate member, a reaction movement thereof in relation to the outer members is substantially prevented.

2. A gear as claimed in Claim 1, characterised in that the supporting under compressive or tensile loading in relation to the neighbouring wheels is caused at least partially by the reaction forces acting on the planetary wheel (2, 3; 12, 13; 22, 23; 32, 33; 53, 54; 63, 64; 72, 73, 74, 75; 86, 87; 92, 93, 94; 104, 105, 124, 124a) when the gear is loaded.

3. A gear as claimed in Claim 1 or 2, characterised in that the floating mounting of the planetary wheel (2, 3; 12, 13; 22, 23; 32, 33; 53, 54; 63, 64; 72, 73, 74, 75; 86, 87; 92, 93, 94; 104, 105, 124, 124a) supported against the neighbouring wheels under – particularly radial – compressive or tensile loading is made displaceable by appropriate mounting with play or by guiding along at least one ath in such a manner that a central axle bearing of the planetary wheel supporting the reaction forces acting on the wheel members is omitted from a centrally mounted arm common to at least the adjacent planetary wheel and excitation to autorotation thereof and hence a circulatory reaction movement of the intermediate member relative to the circulatory movement of the driving member or an outer member (1; 15; 21; 35; 51; 61; 71; 88; 91; 102; 121) or of the driven member or the other outer member (4; 14; 24; 34; 55; 66; 77; 89; 96; 106; 122) is – at least substantially – prevented.

4. A gear as claimed in any one of Claims 1 to 3, characterised in that at least one component of the moment introduced into the intermediate member acts on the wheel body of the planetary wheel (2, 3; 12, 13; 22, 23; 32, 33; 53, 54; 63, 64; 72, 73, 74, 75; 86, 87; 92, 93, 94; 104, 105) in a direction differing from the tangential, on action on the tooth flanks occurring during rolling motion, so that – in cooperation with the other planetary wheels – the intermediate member, with a function uninfluenced from the outside, acquires as a result the function of a kinematic chain – which is at least substantially in balance – for the transmission of a component of force or of a force vector, particularly one which is linear in part, as a result of which a neutralization of the rolling movement of the planetary wheels is caused with simultaneous adaptation of the wheel positions and sizes.

5. A gear as claimed in any one of Claims 1 to 4, characterised in that the arrangement and size of the wheels are so adapted to one another that the forces or components of force transmitted with an altered direction in the intermediate member are directed, in the resultant, at an acute angle (7b), differing from 90°, to the intersection tangent (7a; 78) to the pitch circle of the driven central wheel (4; 14; 24; 34; 55; 66; 77; 89; 96; 106; 122) – preferably in or in the vicinity of the pitch point (7; 85'; 98c; 110) conveying the force out of the wheel chain – to the tooth flanks of the driven central wheel (4; 14; 24; 34; 55; 66; 77; 89; 96; 106; 122).

6. A gear as claimed in any one of Claims 1 to 5, characterised in that the compressive or tensile forces extend to at least one of the neighbouring wheels via a separate arm (27, 30; 40; 68; 111) connecting the wheel axles in each case.

7. A gear as claimed in any one of Claims 1 to 6, characterised in that the planetary-wheel chain of the intermediate member is divided into at least two groups of wheels (92, 93 and 94) of which at least one (92, 93) is mounted on a separate arm (95) which is movable in relation to the position of the other group of wheels (94) and is preferably rotatable about the central axis (90) of the gear, in which case one group of wheels may also consist of one planetary wheel (94) – particularly an end wheel of the wheel chain.

8. A gear as claimed in any one of claims 1 to 7, characterised in that the displaceable arrangement of at least one planetary wheel (22, 23; 32, 33; 63, 64; 104, 105) is achieved as a result of the fact that the planetary wheel is mounted on a separate auxiliary arm (27, 30; 38, 40; 67, 68; 111, 112), the axis of circulation or rotation of which lies on the the main satellite carrier for the wheel chain, particularly in the centre of an adjacent gear-wheel, or on the central axis of the gear.

9. A gear as claimed in any one of Claims 1 to 8, characterised in that the bearing of the planetary wheel (63, 64; 94) with compressive or tensile loading is at least partially ensured by springs (65; 100) or other tensioning means.

10. A gear as claimed in any one of Claims 1 to 9, characterised in that the contact under compressive loading is effected via fixed cylinder surfaces provided beside the teeth and situated substantially in the pitch-circle plane of the teeth or by coaxial, rotatable members with a circular outside contour mounted adjacent the teeth, for example on rolling bearings.

11. A gear as claimed in any one of Claims 1 to 10, characterised in that one of the gear-wheels of the wheel chain of the intermediate member is driven directly – for example via a universal-joint shaft – or indirectly via preceding wheels from the driving shaft.

12. A gear as claimed in any one of Claims 1 to 11, characterised in that a wheel chain of two, four or more gear wheels (2, 3; 12, 13; 53, 54; 63, 64; 72, 73, 74, 75; 103, 104, 105; 131, 132, 133) is disposed between a central, externally toothed sun wheel (1; 15; 51; 61; 71; 102; 138) and a central, internally toothed ring gear (4; 14; 55; 66; 77; 106; 143).

13. A gear as claimed in any one of Claims 1 to 12, characterised in that at least one planetary wheel (12; 33; 54; 63, 64; 73; 93; 104) is designed as a step wheel with two coaxial, rigidly connected toothed rims (12a, 12b; 33a, 33b; 73a, 73b; 93a, 93b) with different diameters, the pitch point (12c; 98a; 108) introducing the force lying on the one toothed rim and the pitch point (12d; 98b; 108a) conveying the force out lying on the other, preferably larger, teethed rim.

14. A gear as claimed in any one of Claims 1 to 13, characterised in that a wheel chain of four planetary wheels (72, 73, 74, 75) connected one behind the other and meshing with one another is disposed between a driving central sun wheel (71) constructed in the form of an externally toothed wheel and a driven sun wheel (77) which is constructed in the form of an internally toothed wheel (ring gear) and is likewise mounted centrally, in such a manner that at least one planetary wheel (72, 75), preferably the outer and/or the inner end wheel of the wheel chain, is in a position of contact, under contact pressure, with respect to the neighbouring wheels (73, 74) meshing therewith, preferably without central mounting on the main satellite carrier, while the other planetary wheels (73, 74) are mounted with their axles on a satellite carrier (76) circulating round the central shaft (70).

15. A gear as claimed in claim 14, characterised in that at least one planetary wheel of the wheel chain, preferably the planetary wheel (74) preceding the end wheel (75) is disposed so that it overlaps the central driving sun wheel (71) as seen in axial projection.

16. A gear as claimed in any one of claims 1 to 13, characterised in that a wheel chain of three planetary wheels (103, 104, 105) connected in series and meshing with one another is disposed in a ring gear (106) designed as a driving or driven member so that a double main planet wheel (103) intercepting the main axis (101) of the gear with its face is connected in a tongue-locked manner to the ring gear (106) on the one hand by a larger toothed rim (103b) via the associated pitch point (107) and on the other hand by a second force path via the smaller toothed rim (103a) and an intermediate planet wheel (104) as well as a further planet wheel (105) following this, via the associated pitch points (108, 108a, 110), either the intermediate planet wheel (104) or the further auxiliary planet wheel being constructed in the form of a coaxial double wheel (104) with the same difference in pitch circle of the toothed rims as the difference in pitch circle of the coaxial toothed rims (103a, 103b) of the main planet wheel (103).

17. A gear as claimed in claim 16, characterised in that the main planet wheel (103) is driven either via its axle by an eccentric (crank 109) rotating on the central shaft (101) or by means of a gear-wheel (102) mounted on or secured to the central spindle (101).

18. A gear as claimed in any one of the claims 1–17, characterised in that the gear (130) forms the control gear for the reaction member (116) of a conventional planetary gear (120).

19. A gear as claimed in claim 18, characterised in that the driving member (121) of the gear (130) is connected to the reaction member (106) of the conventional planetary gear (120) and the driven member (122) of the gear (130) is anchored fixed to the housing, while the intermediate member (124) of the gear (130) is controllable in speed by a suitable device.

20. A gear as claimed in any one of claims 1–19, characterised in that the driving member can be used as a driven member and the driven member as a driving member, while the direction of control movement remains unaltered.

21. A gear as claimed in any one of claims 1–20, characterised in that at least one planetary wheel (53, 53a) is provided symmetrically in duplicate in such a manner that the gear can be driven selectively in the one direction of circulation or in the other.

22. A gear as claimed in any one of claims 1 to 21, characterised in that a toothed ring (131) – preferably supported against the central spindle (136) for additional rotation – with internal and external teeth is interposed between at least one planetary wheel (132) and a neighbouring wheel (133) to this in such a manner that the planetary wheel (132) meshes with the one toothed rim and the neighbouring wheel with the other toothed rim thereof.

23. A gear as claimed in claim 21, characterised in that the toothed ring (131) has at least one further supporting point – preferably against one of the other gear-wheels of the gear or against arm-mounted supporting rollers (145).

24. A gear as claimed in any one of claims 1 to 23, characterised in that the planet-wheel chain consists of three planet wheels connected one behind the other and is disposed between two central ring gears (88, 89) – preferably of different sizes – in which case at least one of the planet wheels can be constructed in the form of a step wheel with two rigidly connected toothed rims of different sizes.

## Revendications

1. Train d'engrenages planétaires comprenant un engrenage menant, un engrenage mené et un engrenage de conduite, dont la vitesse de rotation est variable par rapport à celles de l'engrenage menant et/ou de l'engrenage mené, comprenant des roues dentées constamment en prise et ayant un rapport de transmission permanent prédéterminé, rapport permanent qui est défini par un rapport de transmission existant entre les roues des engrenages extérieurs (1; 15; 21; 35; 51; 61; 71; 88; 91; 102; 121 et 4; 14; 24; 34; 55; 66; 77; 89; 96; 106; 122) et/ou par au moins un degré de démultiplication présent à l'intérieur d'un engrenage intermédiaire comportant des roues satellites (2, 3; 12, 13; 22, 23; 32, 33; 53, 53a, 54; 63, 64; 72, 73, 74; 75; 86, 87; 92, 93, 94; 104, 105; 124, 124a), engrenage intermédiaire qui relie les engrenages extérieurs de telle sorte que ceux-ci tournent dans la même direction, caractérisé par le fait qu'une chaîne de roues satellites intercalées entre l'engrenage extérieur (1; 15; 21; ...) et l'autre engrenage extérieur (4; 14; 24; ...) dont les axes sont situés sur au moins deux lignes radiales mutuellement divergentes (10, 11; 81, 82, 83, 84; 99a, b, c) de l'axe central (8; 18; 25; 36; 50; 60; 70; 80; 90; 101) est disposée, positionnée et dimensionnée en ce qui concerne chacune des roues de telle sorte qu'au moins l'une des roues satellites (2, 3; 12, 13; 22, 23; ...), de préférence celle se trouvant à l'extrémité de la chaîne, soit positionnée de manière flottante par rapport à l'autre ou aux autres roues satellites, de telle sorte que lorsque l'engrenage est sous charge, cette roue parvient au contact des roues adjacentes sous une charge de pression ou de traction présentant au moins une composante radiale et que sans qu'il y ait induction d'une force de commande ou de freinage sur l'engrenage intermédiaire, tout mouvement de réaction de ce dernier par rapport aux engrenages extérieurs soit, au moins presque totalement, empêché.

2. Train d'engrenages selon la revendication 1, caractérisé par le fait que le contact sous une charge de pression ou de traction par rapport aux roues adjacentes est provoqué au moins partiellement par les forces de réaction agissant sur la roue satellite (2, 3; 12, 13; 22, 23; 32, 33; 53, 54; 63, 64; 72, 73, 74, 75; 86, 87; 92, 93, 94; 104, 105; 124, 124a) lorsque l'engrenage est sous charge.

3. Train d'engrenages selon la revendication 1 ou 2, caractérisé par le fait que la position flottante de la roue satellite (2, 3; 12, 13; 22, 23; 32, 33; 53, 54; 63, 64; 72, 73, 74, 75; 86, 87; 92, 93, 94; 104, 105; 124, 124a) prenant appui sur les roues adjacentes sous une charge de pression ou de traction, en particulier radiale, est réalisée par l'existence d'un certain jeu ou d'une liberté de se déplacer le long d'un rail de telle sorte qu'un appui axial de la roue satellite supportant les forces de réaction agissant sur le corps de la roue concerne un support dit «barrette» placée centralement et commun à au moins une autre roue satellite adjacente et de telle sorte que toute incitation à une rotation propre de celle-ci et de ce fait tout mouvement tournant de réaction de l'engrenage intermédiaire par rapport au mouvement de rotation de l'engrenage menant ou d'un engrenage extérieur (1; 15; 21; 35; 51; 61; 71; 88; 91; 102; 121) et de l'engrenage menant ou de l'autre engrenage extérieur (4; 14; 24; 34; 55; 66; 77; 89; 96; 106; 122) se trouvent, au moins presque totalement, empêchés.

4. Train d'engrenages selon l'une des revendications 1 à 3, caractérisé par le fait qu'au moins une composante du couple induit sur l'engrenage intermédiaire agit sur le corps de la roue satellite (2, 3; 12, 13; 22, 23; 32, 33; 53, 54; 63, 64; 72, 73, 74, 75; 86, 87; 92, 93, 94; 104, 105) dans une direction s'écartant de la force tangentielle appliquée sur les flancs des dents apparaissant pendant le mouvement d'engrènement, de telle sorte que, en coopération avec les autres roues satellites, l'engrenage intermédiaire assume, sans influence extérieure, la fonction d'une chaîne cinétique, placée dans un équilibre au moins approximatif, destinée à transmettre une composante de force, en particulier une composante linéaire, ou un vecteur de force, ce qui conduit à une neutralisation du mouvement d'engrènement des roues satellites, les positions et les dimensions des roues étant réglées simultanément.

5. Train d'engrenages selon l'une des revendications 1 à 4, caractérisé par le fait que la disposition et la dimension des roues sont réglées réciproquement de telle sorte que les forces ou composantes de force dans la résultante transmises sous une direction modifiée dans l'engrenage intermédiaire sont orientées selon un angle (7b) dévié de 90° aigu par rapport à la tangente (7a, 78), au cercle primitif de la roue centrale menée (4; 14; 24; 34; 55; 66; 77; 89; 96; 106; 122) – de préférence au point, ou à proximité du point (7, 85′, 98c, 110) d'introduction ou d'émission des forces d'engrènement de la chaîne de roues sur les flancs des dents de la roues centrale menée (4; 14; 24; 34; 55; 66; 77; 89; 96; 106; 122).

6. Train d'engrenages selon l'une des revendications 1 à 5, caractérisé par le fait que les forces de pression ou de traction en direction d'au moins l'une des roues adjacentes passent respectivement par une barrette séparée (27, 30; 40; 68; 111) reliant les axes des roues.

7. Train d'engrenages selon l'une des revendications 1 à 6, caractérisé par le fait que la chaîne de roues planétaires de l'engrenage intermédiaire est divisée en au moins deux groupes de roues (92, 93, 94) dont l'un au moins (92, 93) est positionné sur une barrette (95) séparée, mobile par rapport à la position de l'autre groupe de roues (94), de préférence pouvant tourner autour de l'axe central du train d'engrenages (90), l'un des groupes de roues pouvant d'ailleurs être constitué par une seule roue satellite (94) – en particulier une roue finale de la chaîne de roues.

8. Train d'engrenages selon l'une des revendications 1 à 7, caractérisé par le fait que la mobilité d'au moins une roue satellite (22, 23; 32, 33; 63, 64; 104, 105) est obtenue par le fait que la roue satellite est positionnée sur une barrette auxiliaire séparée (27, 30; 38, 40; 67, 68; 111, 112) dont l'axe de rotation est situé sur le support planétaire principal de la chaîne de roues, en particulier au centre d'une roue adjacente ou encore sur l'axe central du train d'engrenages.

9. Train d'engrenages selon l'une des revendications 1 à 8, caractérisé par le fait que l'application d'une force de pression ou de traction exercée sur la roue satellite (63, 64; 94) est assurée au moins partiellement par des ressorts (65; 100) ou par d'autres moyens de serrage.

10. Train d'engrenages selon l'une des revendications 1 à 9, caractérisé par le fait que le contact sous la force de pression s'effectue, par exemple, par engrènement, par des surfaces cylindriques fixes prévues à proximité de la denture et situées sensiblement dans le plan du cercle primitif de la denture ou par des corps rotatifs coaxiaux, fixés au voisinage de la denture, par exemple, par engagement, lesquels corps présentent un contour extérieur de forme circulaire.

11. Train d'engrenages selon l'une des revendications 1 à 10, caractérisé par le fait que l'une des roues dentées de la chaîne de roues de l'engrenage intermédiaire est entraînée par l'arbre moteur, soit directement – par exemple en passant par un arbre à cardan – soit indirectement en passant par des roues montées en amont.

12. Train d'engrenages selon l'une des revendications 1 à 11, caractérisé par le fait qu'une chaîne de roues composée de 2, 4 ou plusieurs roues dentées (2, 3; 12, 13; 53, 54; 63, 64; 72, 73, 74, 75; 103, 104, 105; 131, 132, 133) est disposée entre une roue planétaire centrale à denture externe (1; 15; 51; 61; 71; 102; 138) et une roue creuse centrale à denture interne (4; 14; 55; 66; 77; 106; 143).

13. Train d'engrenages selon l'une des revendications 1 à 12, caractérisé par le fait qu'au moins une roue satellite (12; 33; 54; 63, 64; 73; 93; 104) est réalisée sous la forme d'une roue à gradins comprenant deux couronnes dentées coaxiales solidaires (12a, 12b; 33a, 33b; 73a, 73b; 93a, 93b) ayant des diamètres différents, le point d'engrènement (12c; 98a; 108) d'introduction des forces étant situé sur l'une des couronnes dentées et le point d'engrènement d'émission des forces (12d; 98b; 108a) étant situé sur l'autre couronne, de préférence la plus grande.

14. Train d'engrenages selon l'une des revendications 1 à 13, caractérisé par le fait qu'entre une roue planétaire (71) centrale, menante, réalisée sous la forme d'une roue extérieure et une roue planétaire (77) également positionnée centralement, menée, réalisée sous la forme d'une roue dentée intérieure (roue creuse), une chaîne de roues formée de quatre roues satellites (72, 73, 74, 75) montées les unes à la suite des autres et qui s'engrènent mutuellement, est disposée de telle sorte qu'au moins l'une des roues satellites (72, 75), de préférence la dernière roue extérieure et/ou intérieure de la chaîne, se trouve, par rapport à ses roues adjacentes (73, 74) et de préférence sans appui central sur le support planétaire principal, dans une position de contact sous pression d'application, tandis que les autres roues satellites (73, 74) prennent appui par leurs axes sur un support planétaire (76) tournant autour de l'arbre central (70).

15. Train d'engrenages selon la revendication 14, caractérisé par le fait qu'au moins une roue satellite de la chaîne de roues, de préférence la roue satellite (74) montée en amont de la roue d'extrémité (75) est disposée de telle sorte que, vue en projection axiale, elle recouvre la roue planétaire centrale (71) menante.

16. Train d'engrenages selon l'une des revendications 1 à 13, caractérisé par le fait que dans une roue creuse (106) réalisée sous la forme d'un engrenage menant ou mené, une chaîne de roues formée de trois roues planétaires (103, 104, 105) s'engrénant mutuellement et montées les unes à la suite des autres est disposée de telle sorte qu'une roue planétaire double (103) recoupant par sa surface frontale l'axe principal (101) du train d'engrenage est accouplée d'une part à une grande roue dentée (103b) par le point d'engrènement correspondant (107) et d'autre part, par un deuxième courant de force passant par la petite roue dentée (103a) et une roue planétaire intermédiaire (104) ainsi que la roue planétaire (105) montée à la suite de la première, à la roue creuse (106) en passant par les points d'engrènement correspondants (108, 108a, 110) tandis que, soit la roue planétaire intermédiaire (104) soit l'autre roue planétaire auxiliaire sont réalisées sous la forme d'une roue coaxiale double (104) ayant la même différence de diamètre primitif de leur couronne dentée que la différence des diamètres primitifs des couronnes dentées coaxiales (103a, 103b) de la roue planétaire principale (103).

17. Train d'engrenages selon la revendication 16, caractérisé par le fait que la roue planétaire principale (103) est entraînée à travers son axe par un excentrique (manivelle 109) tournant sur l'arbre central (101) ou au moyen d'une roue dentée (102) placée ou fixée sur l'axe central (101).

18. Train d'engrenages selon l'une des revendications 1 à 17, caractérisé par le fait que le train d'engrenage (130) constitue l'engrenage de conduite pour l'engrenage de réaction (116) d'un engrenage planétaire (120) classique.

19. Train d'engrenages selon la revendication 18, caractérisé par le fait que la roue menante (121) le train d'engrenage (130) est reliée à la roue de réaction (106) de l'engrenage planétaire classique (120) et que la roue menée (122) du train d'engrenage (130) est ancrée de manière fixe dans son carter tandis que grâce à un dispositif approprié, la vitesse de rotation de la roue intermédiaire (124) du train d'engrenage (130) est réglable.

20. Train d'engrenages selon l'une des revendications 1 à 19, caractérisé par le fait que l'engrenage menant peut servir d'engrenage mené et que l'engrenage mené peut servir d'engrenage menant, la direction du mouvement de conduite restant inchangée.

21. Train d'engrenages selon l'une des revendications 1 à 20, caractérisé par le fait qu'au moins une roue satellite (53, 53a) est prévue en disposition double symétrique de telle sorte que le train d'engrenages puisse tourner, au choix, dans l'une ou dans l'autre direction de rotation.

22. Train d'engrenages selon l'une des revendications 1 à 21, caractérisé par le fait qu'entre au moins une roue satellite (132) et une roue adjacente (133) une bague dentée (131) à denture interne et externe, de préférence prenant appui de manière rotative contre l'axe central (136) – est intercalée de telle sorte que la roue satellite (132) s'engrène dans l'une des dentures de cette bague et la roue adjacente dans l'autre denture.

23. Train d'engrenages selon la revendication 22, caractérisé par le fait que la bague dentée (131) présente au moins un autre point d'appui – de préférence situé sur l'une des autres roues dentées de l'engrenage ou sur des rouleaux de renfort (145) prenant appui sur une barrette.

24. Train d'engrenages selon l'une des revendications 1 à 23, caractérisé par le fait que la chaîne des roues satellites est constituée de trois roues satellites montées les unes à la suite des autres et qu'elle est disposée entre deux roues creuses centrales (88, 89) – de préférence de grandeurs différentes –, tandis qu'au moins l'une des roues satellites peut être réalisée sous la forme d'une roue à gradins comprenant deux couronnes dentées de grandeurs différentes et associées de manière fixe.

0 104 455

FIG. 1

FIG. 2

17

0 104 455

FIG. 3

FIG. 4

19

FIG. 5

FIG. 6

FIG. 6a

FIG. 7

FIG. 8

FIG. 9

FIG. 10

FIG. 11

0 104 455

FIG. 12